# EUROPEAN PATENT SPECIFICATION

(11) **EP 4 568 201 B1**
(45) Date of publication and mention of the grant of the patent: **02.12.2026**
(21) Application number: 22955423.3
(22) Date of filing: 19.08.2022
(51) Int. Cl.: H04L 27/00, H04W 84/12

(54) **METHOD AND APPARATUS FOR ACQUIRING CUSTOM IDENTIFIER, METHOD AND APPARATUS FOR USE OF CUSTOM IDENTIFIER, AND DEVICE AND STORAGE MEDIUM**
VERFAHREN UND VORRICHTUNG ZUR ERFASSUNG EINES BENUTZERDEFINIERTEN IDENTIFIKATORS, VERFAHREN UND VORRICHTUNG ZUR VERWENDUNG EINES BENUTZERDEFINIERTEN IDENTIFIKATORS SOWIE VORRICHTUNG UND SPEICHERMEDIUM
PROCÉDÉ ET APPAREIL D'ACQUISITION D'IDENTIFIANT PERSONNALISÉ, PROCÉDÉ ET APPAREIL D'UTILISATION D'UN IDENTIFIANT PERSONNALISÉ, DISPOSITIF, ET SUPPORT DE STOCKAGE

(43) Date of publication of application: 11.06.2025
(73) Proprietor: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); HUANG, Lei, Singapore 049483 (SG)
(74) Representative: Novagraaf Technologies
(86) International application number: PCT/CN2022/113777
(87) International publication number: WO 2024/036643

(56) References cited:
- EP-B1- 2 664 197
- CN-A- 114 667 754
- US-A1- 2013 329 620
- US-A1- 2019 349 857
- US-A1- 2022 225 221
- 802 11 WORKING GROUP OF THE LAN/MAN STANDARDS COMMITTEE OF THE IEEE COMPUTER SOCIETY: "Draft Standard for Information technology- Tele - communications and information exchange between systems Local and metropolitan area networks- Specific requirements Part 11: Wireless LAN Medium Access Control (MAC) and Physical Layer (PHY) Specifications Amendment 2: Enhancements for Wireless LAN S", vol. 802.11bf drafts, no. D0.2, 25 July 2022 (2022-07-25), pages 1 - 105, XP068192105, Retrieved from the Internet <URL:https://grouper.ieee.org/groups/802/11/private/Draft_Standards/11bf/Draft%20P802.11bf_D0.2.pdf> [retrieved on 20220725]

## Description

### TECHNICAL FIELD

Embodiments of the present disclosure relate to the field of wireless sensing, and in particular, relate to a method and apparatus for acquiring and using a custom identifier, and a device and a storage medium thereof.

### RELATED ART

Wireless local area network (WLAN) sensing refers to a technology for sensing a person or an object in an environment by measuring changes of WLAN signals during scattering and/or reflection by the person or the object. The IEEE P802.11 bf Draft Standard (D0.2) describes a WLAN sensing procedure which is composed of one or more of the following: Sensing session setup, sensing measurement setup, sensing measurement instance(s), sensing measurement setup termination, and sensing session termination. A STA acting as a sensing initiator may participate in a sensing measurement instance as a sensing transmitter, a sensing receiver, both a sensing transmitter and a sensing receiver, or neither a sensing transmitter nor a sensing receiver. A STA acting as a sensing responder may participate in a sensing measurement instance as a sensing transmitter, a sensing receiver, or both a sensing transmitter and a sensing receiver. European Patent No. EP2664197B1 provides a communication method based on identifying information assignment in a WLAN system, which is performed by a STA. The method includes receiving an identifier assignment message from an access point (AP), wherein the identifier assignment message comprises identifying information for the STA, and TIM offset information for a time point at which at least one traffic indication map (TIM) element for the STA starts to be transmitted; receiving a first TIM element from the AP at a time point indicated by the TIM offset information; determining whether the first TIM element comprises the identifying information; and receiving a first data frame from the AP if the first TIM element contains the identifying information.

### SUMMARY

Embodiments of the present disclosure provide a method and apparatus for receiving a sensing signal. The technical solutions are as follows.

According to some embodiments of the present disclosure, a method for receiving a sensing signal is provided. The method is applicable to a fourth device. The method includes:
transmitting a sensing measurement trigger frame carrying third identification information of at least one sensing transmitter, where the sensing measurement trigger frame includes a first association identifier (AID), the first AID value being an AID value of a sensing receiver; and the third identification information includes at least one of a medium access control (MAC) address, a second AID, an unassociation station identifier (USID), or a custom identifier, the second AID value being an AID value of the at least one sensing transmitter corresponding to the sensing receiver.

According to some embodiments of the present disclosure, a method for receiving a sensing signal is provided. The method is applicable to a sensing receiver. The method includes:
receiving a sensing measurement trigger frame carrying third identification information of at least one sensing transmitter, where the sensing measurement trigger frame includes a first AID, the first AID value being an AID value of the sensing receiver; and the third identification information includes at least one of a MAC address, a second AID, a USID, or a custom identifier, the second AID value being an AID value of the at least one sensing transmitter corresponding to the sensing receiver.

According to some embodiments of the present disclosure, an apparatus for receiving a sensing signal is provided. The apparatus includes:
a transmitting module, configured to transmit a sensing measurement trigger frame carrying third identification information of at least one sensing transmitter, where the sensing measurement trigger frame includes a first AID, the first AID value being an AID value of a sensing receiver; and the third identification information includes at least one of a MAC address, a second AID, a USID, or a custom identifier, the second AID value being an AID value of the at least one sensing transmitter corresponding to the sensing receiver.

### BRIEF DESCRIPTION OF THE DRAWINGS

FIG. 1 is a schematic diagram of a wireless communication system according to some embodiments of the present disclosure;
FIG. 2 is a schematic diagram of a typical scenario of performing a sensing measurement based on a sensing signal according to some embodiments of the present disclosure;
FIG. 3 is a schematic diagram of a typical scenario of a sensing by proxy according to some embodiments of the present disclosure;
FIG. 4 is a flowchart of a method for acquiring a custom identifier according to some embodiments of the present disclosure;
FIG. 5 is a flowchart of a method for acquiring a custom identifier according to some embodiments of the present disclosure;
FIG. 6 is a flowchart of a method for acquiring a custom identifier according to some embodiments of the present disclosure;
FIG. 7 is a flowchart of a method for acquiring a custom identifier according to some embodiments of the present disclosure;
FIG. 8 is a flowchart of a method for acquiring a custom identifier according to some embodiments of the present disclosure;
FIG. 9 is a flowchart of a method for acquiring a custom identifier according to some embodiments of the present disclosure;
FIG. 10 is a flowchart of a method for acquiring a custom identifier according to some embodiments of the present disclosure;
FIG. 11 is a flowchart of a method for acquiring a custom identifier according to some embodiments of the present disclosure;
FIG. 12 is a flowchart of a method for acquiring a custom identifier according to some embodiments of the present disclosure;
FIG. 13 is a schematic diagram of a sensing setup request frame according to some embodiments of the present disclosure;
FIG. 14 is a flowchart of a method for acquiring a custom identifier according to some embodiments of the present disclosure;
FIG. 15 is a schematic diagram of a sensing-by-proxy request frame according to some embodiments of the present disclosure;
FIG. 16 is a flowchart of a method for generating a custom identifier according to some embodiments of the present disclosure;
FIG. 17 is a flowchart of a method for using a custom identifier according to some embodiments of the present disclosure;
FIG. 18 is a schematic diagram of a typical scenario of using a custom identifier according to some embodiments of the present disclosure;
FIG. 19 is a schematic diagram of a sensing measurement report frame according to some embodiments of the present disclosure;
FIG. 20 is a flowchart of a method for using a custom identifier according to some embodiments of the present disclosure;
FIG. 21 is a flowchart of a method for using a custom identifier according to some embodiments of the present disclosure;
FIG. 22 is a flowchart of a method for using a custom identifier according to some embodiments of the present disclosure;
FIG. 23 is a flowchart of a method for using a custom identifier according to some embodiments of the present disclosure;
FIG. 24 is a schematic diagram of a sensing setup response frame according to some embodiments of the present disclosure;
FIG. 25 is a flowchart of a method for using a custom identifier according to some embodiments of the present disclosure;
FIG. 26 is a flowchart of a method for using a custom identifier according to some embodiments of the present disclosure;
FIG. 27 is a flowchart of a method for using a custom identifier according to some embodiments of the present disclosure;
FIG. 28 is a schematic diagram of a sensing measurement trigger frame according to some embodiments of the present disclosure;
FIG. 29 is a flowchart of a method for using a custom identifier according to some embodiments of the present disclosure;
FIG. 30 is a flowchart of a method for using a custom identifier according to some embodiments of the present disclosure;
FIG. 31 is a flowchart of a method for using a custom identifier according to some embodiments of the present disclosure;
FIG. 32 is a flowchart of a method for using a custom identifier according to some embodiments of the present disclosure;
FIG. 33 is a flowchart of a method for using a custom identifier according to some embodiments of the present disclosure;
FIG. 34 is a flowchart of a method for receiving a sensing signal according to some embodiments of the present disclosure;
FIG. 35 is a schematic diagram of a sensing setup request frame according to some embodiments of the present disclosure;
FIG. 36 is a schematic diagram of a sensing setup request frame according to some embodiments of the present disclosure;
FIG. 37 is a schematic diagram of a sensing polling trigger frame according to some embodiments of the present disclosure;
FIG. 38 is a schematic diagram of a sensing polling trigger frame according to some embodiments of the present disclosure;
FIG. 39 is a schematic diagram of a sensing-by-proxy request frame according to some embodiments of the present disclosure;
FIG. 40 is a flowchart of a method for receiving a sensing signal according to some embodiments of the present disclosure;
FIG. 41 is a block diagram of an apparatus for acquiring a custom identifier according to some embodiments of the present disclosure;
FIG. 42 is a block diagram of an apparatus for generating a custom identifier according to some embodiments of the present disclosure;
FIG. 43 is a block diagram of an apparatus for using a custom identifier according to some embodiments of the present disclosure;
FIG. 44 is a block diagram of an apparatus for using a custom identifier according to some embodiments of the present disclosure;
FIG. 45 is a block diagram of an apparatus for using a custom identifier according to some embodiments of the present disclosure;
FIG. 46 is a block diagram of an apparatus for receiving a sensing signal according to some embodiments of the present disclosure;
FIG. 47 is a block diagram of an apparatus for receiving a sensing signal according to some embodiments of the present disclosure; and
FIG. 48 is a block diagram of a WLAN device according to some embodiments of the present disclosure.

### DETAILED DESCRIPTION

The invention is defined by the appended claims. For clearer descriptions of the objectives, technical solutions, and advantages of the present disclosure, embodiments of the present disclosure are further described in detail hereinafter with reference to the accompanying drawings.

The network architecture and service scenarios in the embodiments of the present disclosure are intended to describe the technical solutions according to the embodiments of the present disclosure more clearly, but do not constitute a limitation on the technical solutions according to the embodiments of the present disclosure. Those of ordinary skill in the art learn that, with the evolution of the network architecture and the emergence of new service scenarios, the technical solutions according to the embodiments of the present disclosure are also applicable to similar technical problems.

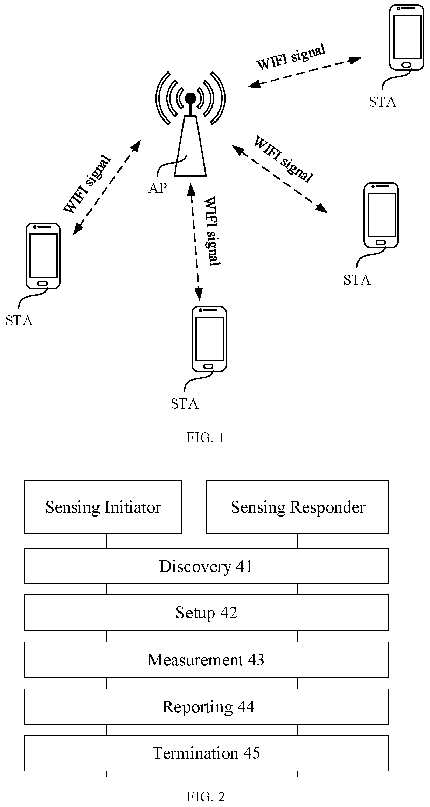

FIG. 1 illustrates a schematic diagram of a wireless communication system according to some embodiments of the present disclosure. As shown in FIG. 1, the wireless communication system includes an access point (AP) and a station (STA).

In some scenarios, the AP is also referred to as an AP STA. That is, the AP is also the STA in some way. In some scenarios, the STA is also referred to as a non-AP STA.

In some embodiments, STAs include an AP STA and a non-AP STA. Communications in the communication system include communication between the AP and the non-AP STA, communication between the non-AP STA and the non-AP STA, or communication between the STA and a peer STA. The peer STA refers to a device communicating with the STA at an opposite terminal. For example, the peer STA is an AP or a non-AP STA.

The AP is a bridge to connect wired and wireless networks, and mainly functions as connecting various wireless network clients and then accessing the wireless network to the Ethernet. AP devices are terminal devices (such as mobile phones) equipped with wireless-fidelity (Wi-Fi) chips or network devices (such as routers).

It should be understood that the role of the STA in the communication system is not absolute. For example, in some scenarios, the mobile phone is a non-AP STA in the case that a mobile phone is connected to a router, and the mobile phone is an AP in the case that the mobile phone is a hotspot for other mobile phones.

Both the AP and the non-AP STA are devices applicable to the Internet of Vehicles, Internet of Things (IoT) nodes and sensors in the IoT, smart cameras, smart remote controls, smart water meters and electricity meters in smart homes, sensors in smart cities, and the like.

In some embodiments, the non-AP STA supports the 802.11be format. The non-AP STA also supports various current and future WLAN formats of the 802.11 family, such as an 802.11ax format, an 802.11ac format, an 802.11n format, an 802.11g format, an 802.11b format, an 802.11a format, and the like.

In some embodiments, the AP is a device that supports the 802.11be format. The AP is also a device that supports various current and future WLAN formats of the 802.11 family, such as an 802.11ax format, an 802.11ac format, an 802.11n format, an 802.11g format, an 802.11b format, an 802.11a format, and the like.

It should be noted that the above protocols are only examples, and the protocols supported by the AP and the STA are not limited to the above protocols.

In the embodiments of the present disclosure, the STA is a device that supports WLAN/Wi-Fi technology, such as a mobile phone, a pad, a computer, a virtual reality (VR) device, an augmented reality (AR) device, an industrial control wireless device, a set-top box, a self-driving wireless device, an in-vehicle communication device, a remote medical wireless device, a smart grid wireless device, a transportation safety wireless device, a smart city or smart home wireless device, a wireless communication chip/application specific integrated circuit (ASIC)/system on chip (SoC), and the like.

Frequency bands supported by the WLAN technology include but are not limited to low-frequency bands (2.4 GHz, 5 GHz, and 6 GHz) and high-frequency bands (45 GHz and 60 GHz).

One or more links are present between the STA and the AP. In some embodiments, the STA and the AP support multi-frequency-band communication, for example, simultaneous communications at frequency bands of 2.4 GHz, 5 GHz, 6 GHz, 45 GHz, and 60 GHz, or simultaneous communications in different channels at a same frequency band (or different frequency bands), such that the communication throughput and/or reliability between devices are improved. Such devices are often referred to as multi-frequency-band devices, multi-link devices (MLDs), multi-link entities, or multi-frequency-band entities. The MLD is an AP device or an STA device. In the case that the MLD is an AP device, the MLD includes one or more APs. In the case that the MLD is an STA device, the MLD includes one or more non-AP STAs.

The MLD including one or more APs is referred to as an AP, and the MLD including one or more non-AP STAs is referred to as a non-AP.

In the embodiments of the present disclosure, the AP includes a plurality of APs, the non-AP includes a plurality of STAs, a plurality of links are formed between the APs in the AP and the STAs in the non-AP, and data communications between the APs in the AP and the corresponding STAs in the non-AP are achieved over the corresponding links.

The AP is a device deployed in a WLAN to provide a wireless communication function for the STA. The STA includes: user equipment (UE), an access terminal, a subscriber unit, a subscriber station, a mobile station, a mobile console, a remote station, a remote terminal, a mobile device, a wireless communication device, a user agent, a user apparatus, and the like. In some embodiments, the STA is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

Before description of the technical solutions of the present disclosure, some background technical knowledge in the present disclosure is first explained. As an alternative, the following related technologies may be combined with the technical solutions according to the embodiments of the present disclosure in any manner, all of which fall within the scope of protection of the embodiments of the present disclosure. The embodiments of the present disclosure include at least part of the following content.

WLAN sensing refers to a method or application for sensing a person or an object in an environment by measuring changes in WLAN signals scattered and/or reflected by the person or the object. WLAN terminals participating in the sensing may include a sensing measurement initiator, a sensing measurement responder, a sensing transmitter, a sensing receiver, and the like. In some embodiments, devices participating in the WLAN sensing include a sensing initiator (that is, a sensing measurement initiator) and a sensing responder (that is, a sensing measurement responder). Alternatively, devices participating in the WLAN sensing include a sensing transmitting device (that is, a sensing transmitter) and a sensing receiving device (that is, a sensing receiver).

For improvement of precision of a measurement result, a sensing application program needs to combine the sensing result and position information of a sensing participant for processing upon receipt of the sensing result of the sensing participant. That is, the sensing application program needs to learn the sensing transmitter and/or the sensing receiver corresponding to each sensing result. Generally, position information of each device acquired by a method other than the Institute of Electrical and Electronics Engineers (IEEE) 802.11 protocol is indexed by a MAC address of the device.

However, in a WLAN sensing scenario, a sensing result needs to avoid carrying the MAC address of the sensing participant to protect privacy of the sensing participant.

As shown in FIG. 2, WLAN sensing measurement includes one or more of the following phases: a sensing discovery phase 41, a measurement setup phase 42, a sensing measurement phase 43, a sensing reporting phase 44, and a measurement termination phase 45. The same WLAN terminal may have one or more roles in a sensing measurement. For example, a sensing initiator may be only a sensing initiator, a sensing transmitter, a sensing receiver, or both a sensing transmitter and a sensing receiver.

The sensing discovery phase is for initiating a sensing measurement.

The measurement setup phase is for setting up the sensing measurement, determining a sensing measurement participant and a role thereof (including the sensing transmitter and the sensing receiver), determining operation parameters related to the sensing measurement, and optionally exchanging the parameters between terminals.

The sensing measurement phase is for implementing the sensing measurement, in which a sensing signal is transmitted to the sensing receiver by the sensing transmitter.

The sensing reporting phase is for reporting a measurement result, and the sensing receiver may be required to report the measurement result to the sensing measurement initiator, which is determined based on an application scenario.

The measurement termination phase is for the terminals to stop performing measurement and the sensing measurement.

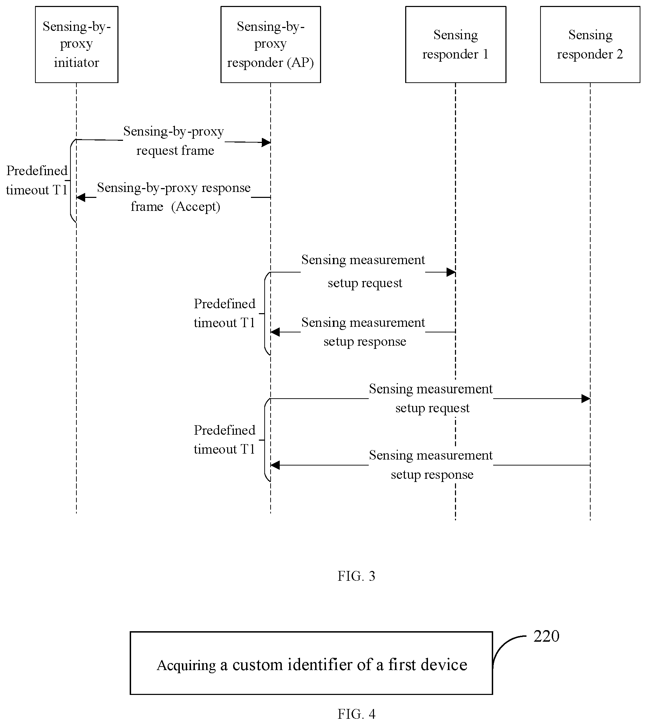

In some embodiments, as shown in FIG. 3, a sensing-by-proxy initiator transmits a sensing-by-proxy request frame to a sensing-by-proxy responder (AP) to request the sensing-by-proxy responder to establish sensing measurement (for example, WLAN sensing) on behalf of the sensing-by-proxy initiator, and the sensing-by-proxy responder transmits a sensing-by-proxy response frame to the sensing-by-proxy initiator to accept a sensing task on behalf of the sensing-by-proxy initiator.

Illustratively, the sensing-by-proxy responder transmits a sensing measurement setup request frame to a sensing responder to establish the sensing measurement setup; and the sensing responder transmits a sensing measurement setup response frame to the sensing-by-proxy responder to confirm establishment of the sensing measurement.

Some terms involved in the embodiments of the present disclosure are described as follows.

AID is for identifying a terminal that has established an association with an AP.

USID is for identifying an STA that is unassociated with an AP.

MAC is short for Medium Access Control Protocol or a medium access control address.

Transmission opportunity (TXOP) refers to a time period in which a device that has the TXOP may actively initiate one or more transmissions.

WLAN sensing is a technology for sensing a person or an object in an environment by measuring changes in WLAN signals scattered and/or reflected by the person or the object. That is, in the WLAN sensing, a surrounding environment is measured and detected based on a wireless signal to achieve various functions, for example, detection of indoor intrusions/movements/fall, gesture recognition, and spatial three dimensions image construction.

WLAN devices participating in the WLAN sensing include the following roles:
a sensing initiator, a device that initiates a sensing measurement and desiring to obtain a sensing result;
a sensing responder, a non-sensing initiator device that participates in the sensing measurement;
a sensing signal transmitter, or referred to as a sensing transmitter, a device that transmits a sensing measurement signal (a sensing illumination signal);
a sensing signal receiver, or referred to as a sensing receiver, a device that receives a sensing measurement signal;
a sensing-by-proxy initiator, also referred to as a sensing-by-proxy request device or sensing-by-proxy requester, a device that requests other devices to initiate a sensing measurement;
a sensing-by-proxy responder, also referred to as a sensing proxy STA or sensing by proxy responder, a device that responds to the request from the sensing-by-proxy initiator and initiates the sensing measurement;
a sensing processor, a device that processes a sensing measurement result; and
a sensing participant, including a sensing initiator, a sensing transmitter, and a sensing receiver that participate in the sensing measurement in the embodiments of the present disclosure; or only include non-sensing initiator devices participating in the sensing measurement. That is, in this case, the sensing participant is the same as the sensing responder.

A WLAN terminal may have one or more roles in a sensing measurement. For example, the sensing initiator may be only a sensing initiator, a sensing transmitter, a sensing receiver, or both a sensing transmitter and a sensing receiver.

FIG. 4 illustrates a flowchart of a method for acquiring a custom identifier (or an STA identifier) according to some embodiments of the present disclosure. The method is applicable to a first device, and includes the following process.

**In S220, a custom identifier of a first device is acquired.**

The first device is a sensing participant. For roles in WLAN sensing, the first device is at least one of a sensing initiator, a sensing responder, a sensing transmitter, a sensing receiver, a sensing-by-proxy initiator, a sensing-by-proxy responder, a sensing processor, or a sensing participant. For device types, the first device is an AP device or an STA device. The scope of the first device is not limited in the present disclosure. The embodiments are illustrated using an example where the first device is an STA and the custom identifier of the first device is an STA identifier.

The custom identifier is for identifying an identity of a sensing participant in a WLAN sensing process and/or in a WLAN sensing result, that is, the identity of the first device in the embodiments of the present disclosure. It should be noted that the custom identifier is different from at least one of the following identification information of the sensing participant: a MAC address, an AID, or a USID. In some embodiments, the custom identifier is used in or designed for the WLAN sensing process. That is, for the same device, the custom identifier is different from an identifier of the device used in a non-WLAN sensing process. The non-WLAN sensing process includes a WLAN association process, a WLAN communications process, and the like.

Illustratively, the first device receives a custom identifier configured by a third-party configuration program for the first device; generates the custom identifier of the first device; receives a custom identifier configured by a sensing application program for the first device; or receives a sensing setup request frame, where the sensing setup request frame carries the custom identifier of the first device.

That is, the custom identifier of the first device is configured by the third-party configuration program, generated by the first device, or configured by the sensing application program specific to the WLAN sensing.

The three modes for setting the custom identifier of the first device are described hereinafter, and at least one of or any one of the three modes may be used in different embodiments.

### (1) Mode 1: The custom identifier is configured by the third-party configuration program for the first device.

The third-party configuration program is for configuring the custom identifier for the first device and is a non-sensing application program. The third-party configuration program runs in at least one of: a configurator device, a sensing initiator, or a sensing-by-proxy initiator. The third-party configuration program is present in an AP, a server, and an STA capable of working for a long time.

Illustratively, in the case that the third-party configuration program runs in the configurator device, the custom identifier of the first device is consistent in all sensing measurements; in the case that the third-party configuration program runs in the sensing initiator, the custom identifier of the first device is consistent in the sensing measurements initiated by the sensing initiator; or, in the case that the third-party configuration program runs in the sensing-by-proxy initiator, the custom identifier of the first device is consistent in the sensing measurements initiated by the sensing-by-proxy initiator.

Illustratively, the first device receives the custom identifier configured by the third-party configuration program for the first device in a communication mode other than communication modes based on the IEEE 802.11 protocol. The communication mode other than communication modes based on the IEEE 802.11 protocol includes at least one of: a communication mode based on Transmission Control Protocol (TCP), a communication mode based on User Datagram Protocol (UDP), or a communication mode based on Bluetooth protocol. The communication mode based on the Bluetooth protocol may be Bluetooth protocol or Bluetooth Low Energy (BLE) protocol.

Illustratively, the first device includes (or runs or is equipped with) an upper-layer application and an STA management entity, and an access interface provided inside an STA is present between the upper-layer application and the STA management entity. The upper-layer application in the first device is configured to receive the custom identifier transmitted in the communication mode other than the communication modes based on the IEEE 802.11 protocol. For example, the upper-layer application in the first device is the third-party configuration program.

Illustratively, the upper-layer application in the first device receives the custom identifier configured by the third-party configuration program for the first device, and sets the custom identifier to the STA management entity in the first device.

Illustratively, the upper-layer application sets the custom identifier to the STA management entity in the first device over the internal STA interface.

Illustratively, a corresponding relationship between the custom identifier and first identification information corresponding to the first device is stored in a database or a server. The first identification information includes at least one of a MAC address, an AID, or a USID. The above database is set in an AP device. As the corresponding relationship between the custom identifier and the first identification information of the first device is stored in the database or the server, the sensing application program can query the database or the server in the case that the sensing application program needs to obtain the first identification information of the first device. For example, the sensing application program queries to obtain at least one of the MAC address, the AID, or the USID of the first device based on the custom identifier of the first device. Illustratively, the sensing application program queries to obtain the MAC address of the first device based on the custom identifier of the first device, and then determines the position information of the first device based on the MAC address, such that the precision of the sensing result is improved.

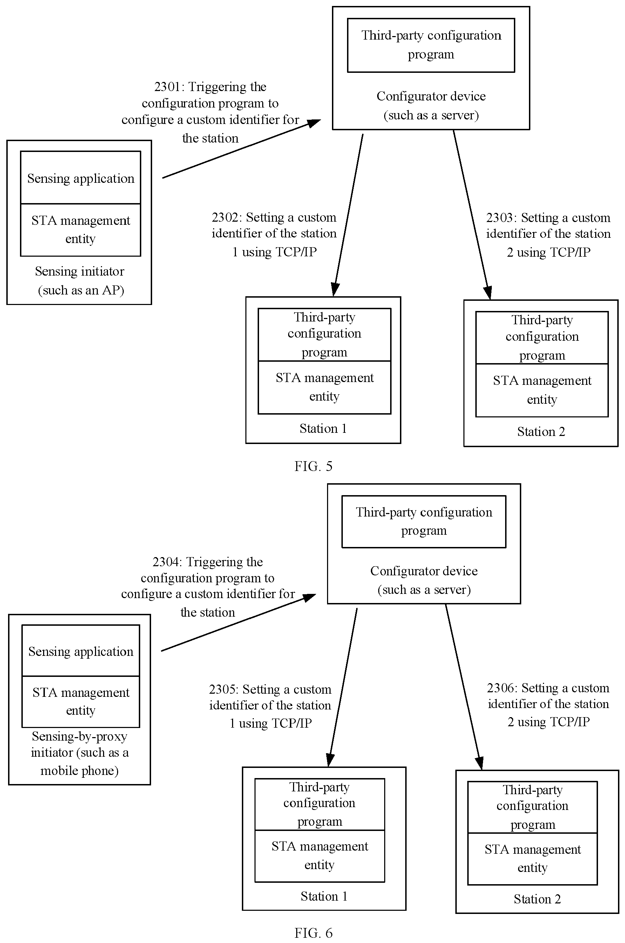

FIGS. 5 to 8 illustrate schematic diagrams of configuration of a custom identifier by a third-party configuration program for a first device according to some embodiments of the present disclosure.

FIG. 5 illustrates a schematic diagram of configuration of a custom identifier by a third-party configuration program for a first device in a non-sensing by proxy scenario where the third-party configuration program is in a configurator device, which is illustrated using an example where first devices are the STA 1 and the STA 2.

In the scenario shown in FIG. 5, for the WLAN sensing measurement, the sensing initiator is the AP, and the sensing responders are the STA 1 and the STA 2; and for the custom identifier configuration, the configurator device is a server, and the configured devices are the STA 1 and the STA 2.

**In S2301, a third-party configuration program is triggered to configure a custom identifier for the STA.**

Illustratively, in the case that the sensing initiator (for example, an AP) needs to establish a sensing measurement, the sensing initiator triggers the third-party configuration program in the configurator device (for example, a server) for configuring the custom identifier.

Illustratively, the third-party configuration program, after being triggered, configures the custom identifier for the first device.

In some embodiments, the custom identifier of the AP is a default value, for example, 0.

**In S2302, a custom identifier of the STA 1 is set based on the TCP/IP protocol.**

Illustratively, after configuring the custom identifier for the STA 1, the third-party configuration program in the server transmits, using the TCP/IP protocol, the custom identifier of the STA 1 to an upper-layer application in the STA 1, that is, a third-party configuration program in the STA 1. After receiving the custom identifier, the third-party configuration program in the STA 1 sets the custom identifier to the STA management entity of the STA 1 over the internal STA interface.

In some embodiments, the third-party configuration program stores the corresponding relationship between the custom identifier and the first identification information corresponding to the STA 1 in a database or a server. The first identification information includes at least one of a MAC address, an AID, or a USID. For example, after receiving the custom identifier of the STA 1, the third-party configuration program stores the custom identifier and the MAC address corresponding to the STA 1 in a database or a server, such that each sensing application can query the database or the server based on the custom identifier set for the STA 1 to obtain the MAC address corresponding to the STA 1.

In some embodiments, the third-party configuration program obtains the first identification information corresponding to the STA 1 in communication modes based on the IEEE 802.11 protocol or communication modes other than the IEEE 802.11 protocol, for example, using the Bluetooth protocol or an Address Resolution Protocol (ARP).

Illustratively, in the case that the third-party configuration program runs in the configurator device, the custom identifier of the first device is consistent in all sensing measurements. That is, in the embodiments of the present disclosure, in the case that the third-party configuration program runs in the server, the custom identifier of the STA 1 is consistent in all the sensing measurements. That is, the custom identifier of the STA 1 is unrelated to a sensing initiator or a sensing-by-proxy initiator.

**In S2303, a custom identifier of the STA 2 is set based on the TCP/IP protocol.**

Illustratively, after configuring the custom identifier for the STA 2, the third-party configuration program in the server transmits, using the TCP/IP protocol, the custom identifier of the STA 2 to an upper-layer application in the STA 2, that is, a third-party configuration program in the STA 2.

For a detailed implementation process of S2303, reference may be made to S2302, which is not repeated herein.

It should be noted that the present disclosure does not limit the order of S2302 and S2303. S2302 may be performed before S2303, S2303 may be performed before S2302, or, S2302 and S2303 may be performed concurrently, which is not limited in the present disclosure.

FIG. 6 illustrates a schematic diagram of configuration of a custom identifier by a third-party configuration program for a first device in a sensing by proxy scenario where the third-party configuration program is in a configurator device, which is illustrated using an example where first devices are STA 1 and STA 2.

In the scenario shown in FIG. 6, for the sensing by proxy, the sensing-by-proxy initiator is a terminal (a mobile phone), and the sensing-by-proxy responder is the AP (not shown in the drawing); for the WLAN sensing measurement, the sensing initiator is the AP (not shown in the drawing), and the sensing responders are the STA 1 and the STA 2; and for setting of the custom identifier, the configurator device is a server, and the configured devices are the STA 1 and the STA 2.

**In S2304, a third-party configuration program is triggered to configure a custom identifier for the STA.**

Illustratively, in the case that the sensing-by-proxy initiator (for example, a mobile phone) needs to establish a sensing measurement, the sensing-by-proxy initiator triggers a specific third-party configuration program in the configurator device (for example, a server) for configuring the custom identifier.

Illustratively, the third-party configuration program, after being triggered, configures the custom identifier for the first device.

In some embodiments, the custom identifier of the AP is a default value, for example, 0.

**In S2305, a custom identifier of the STA 1 is set based on the TCP/IP protocol.**

Illustratively, after configuring the custom identifier for the STA 1, the third-party configuration program in the server transmits, using the TCP/IP protocol, the custom identifier of the STA 1 to the upper-layer application in the STA 1, that is, the third-party configuration program in the STA 1. After receiving the custom identifier, the third-party configuration program in the STA 1 sets the custom identifier to the STA management entity of the STA 1 over the internal STA interface.

In some embodiments, the third-party configuration program stores the corresponding relationship between the custom identifier and the first identification information corresponding to the STA 1 in a database or a server. The first identification information includes at least one of a MAC address, an AID, or a USID. For example, after receiving the custom identifier of the STA 1, the third-party configuration program stores the custom identifier and the MAC address corresponding to the STA 1 in a database or a server, such that each sensing application can query the database or the server based on the custom identifier set for the STA 1 to obtain the MAC address corresponding to the STA 1.

In some embodiments, the third-party configuration program obtains the first identification information corresponding to the STA 1 in communication modes based on the IEEE 802.11 protocol or communication modes other than the IEEE 802.11 protocol, for example, using the Bluetooth protocol or the ARP.

Illustratively, in the case that the third-party configuration program runs in the configurator device, the custom identifier of the first device is consistent in all sensing measurements. That is, in the embodiments of the present disclosure, in the case that the third-party configuration program runs in the server, the custom identifier of the STA 1 is consistent in all the sensing measurements. That is, the custom identifier of the STA 1 is unrelated to a sensing initiator or a sensing-by-proxy initiator.

**In S2306, a custom identifier of the STA 2 is set based on the TCP/IP protocol.**

Illustratively, after configuring the custom identifier for the STA 2, the third-party configuration program in the server transmits, using the TCP/IP protocol, the custom identifier of the STA 2 to the upper-layer application in the STA 2, that is, the third-party configuration program in the STA 2.

For a detailed implementation process of S2306, reference may be made to S2305, which is not repeated herein.

It should be noted that the present disclosure does not limit the order of S2305 and S2306. S2305 may be performed before S2306, S2306 may be performed before S2305 or, S2305 and S2306 may be performed concurrently, which is not limited in the present disclosure.

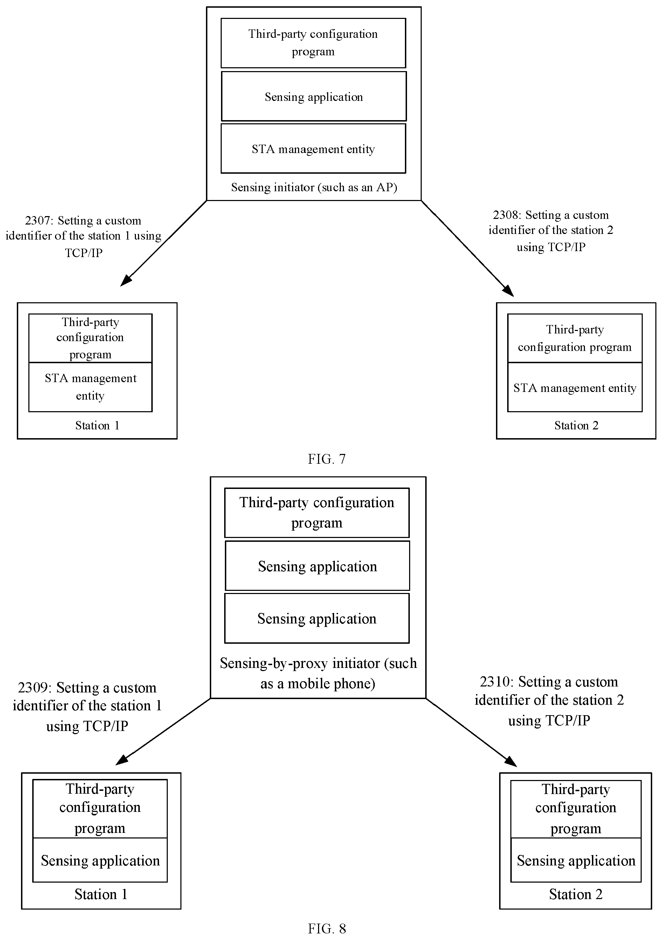

FIG. 7 illustrates a schematic diagram of configuration of a custom identifier by a third-party configuration program for a first device in a non-sensing by proxy scenario where the third-party configuration program is in a sensing initiator, which is illustrated using an example where first devices are the STA 1 and the STA 2.

In the scenario shown in FIG. 7, for the WLAN sensing measurement, the sensing initiator is an AP, and the sensing responders are the STA 1 and the STA 2; and for setting of the custom identifier, the configurator device is a sensing initiator (that is, an AP), and the configured devices being are the STA 1 and the STA 2.

**In S2307, a custom identifier of the STA 1 is set based on the TCP/IP protocol.**

Illustratively, in the case that the third-party configuration program runs in the sensing initiator (for example, an AP), the upper-layer application in the sensing initiator includes a sensing application and the third-party configuration program, and the upper-layer application in the sensing initiator access the STA management entity over the internal STA interface.

Illustratively, in the case that the sensing initiator needs to establish a sensing measurement, the sensing initiator triggers the third-party configuration program in the sensing initiator for configuring the custom identifier.

Illustratively, the third-party configuration program, after being triggered, configures the custom identifier for the first device. That is, the third-party configuration program, after being triggered, configures the custom identifier for the STA 1.

Illustratively, after configuration, the third-party configuration program in the sensing initiator transmits, using the TCP/IP protocol, the custom identifier of the STA 1 to the upper-layer application in the STA 1, that is, the third-party configuration program in the STA 1. After receiving the custom identifier, the third-party configuration program in the STA 1 sets the custom identifier to then STA management entity of the STA 1 over the internal STA interface.

In some embodiments, the third-party configuration program stores the corresponding relationship between the custom identifier and the first identification information corresponding to the STA 1 in a database or a server. The first identification information includes at least one of a MAC address, an AID, or a USID. For example, after receiving the custom identifier of the STA 1, the third-party configuration program stores the custom identifier and the MAC address corresponding to the STA 1 in a database in the AP or a server, such that each sensing application can query the database or the server based on the custom identifier set for the STA 1 to obtain the MAC address corresponding to the STA 1.

In some embodiments, the third-party configuration program obtains the first identification information corresponding to the STA 1 in communication modes based on the IEEE 802.11 protocol or communication modes other than the IEEE 802.11 protocol, for example, using the Bluetooth protocol or the ARP.

Illustratively, in the case that the third-party configuration program runs in the sensing initiator, the custom identifier of the first device is consistent in the sensing measurements initiated by the sensing initiator. That is, the custom identifier configured by the third-party configuration program in the sensing initiator for the STA 1 is unchanged in all the sensing measurements initiated by the sensing initiator.

**In S2308, a custom identifier of the STA 2 is set based on the TCP/IP protocol.**

Illustratively, after configuring the custom identifier for the STA 2, the third-party configuration program in the sensing initiator transmits, using the TCP/IP protocol, the custom identifier of the STA 2 to the upper-layer application in the STA 2, that is, the third-party configuration program in the STA 2.

For a detailed implementation process of S2308, reference may be made to S2307, which is not repeated herein.

It should be noted that the present disclosure does not limit the order of S2307 and S2308. S2307 may be performed before S2308, S2308 may be performed before S2307, or S2307 and S2308 may be performed concurrently, which is not limited in the present disclosure.

FIG. 8 illustrates a schematic diagram of configuration of a custom identifier by a third-party configuration program for a first device in a sensing by proxy scenario where the third-party configuration program is in a sensing-by-proxy initiator, which is illustrated using an example where first devices are the STA 1 and the STA 2.

In the scenario shown in FIG. 8, for the sensing by proxy, the sensing-by-proxy initiator is the terminal (a mobile phone), and the sensing-by-proxy responder is the AP (not shown in the drawing);for the WLAN sensing measurement, the sensing initiator is the AP (not shown in the drawing), and the sensing responders are the STA 1 and the STA 2; and for setting of the custom identifier, the configurator device is a sensing-by-proxy initiator (for example, a mobile phone), and the configured devices are the STA 1 and the STA 2.

**In S2309, a custom identifier of the STA 1 is set based on the TCP/IP protocol.**

Illustratively, in the case that the third-party configuration program runs in the sensing-by-proxy initiator (for example, a mobile phone), the upper-layer application in the sensing-by-proxy initiator includes a sensing application and the third-party configuration program, and the upper-layer application in the sensing-by-proxy initiator access the STA management entity over the internal STA interface.

Illustratively, in the case that the sensing-by-proxy initiator needs to establish a sensing measurement, the sensing-by-proxy initiator triggers the third-party configuration program in the sensing-by-proxy initiator for configuring the custom identifier.

Illustratively, the third-party configuration program, after being triggered, configures the custom identifier for the first device. That is, the third-party configuration program, after being triggered, configures the custom identifier for the STA 1.

Illustratively, after configuration, the third-party configuration program in the sensing-by-proxy initiator transmits, using the TCP/IP protocol, the custom identifier of the STA 1 to the upper-layer application in the STA 1, that is, the third-party configuration program in the STA 1. After receiving the custom identifier, the third-party configuration program in the STA 1 sets the custom identifier to the STA management entity of the STA 1 over the internal STA interface.

In some embodiments, the third-party configuration program stores the corresponding relationship between the custom identifier and the first identification information corresponding to the STA 1 in a database or a server. The first identification information includes at least one of a MAC address, an AID, or a USID. For example, after receiving the custom identifier of the STA 1, the third-party configuration program stores the custom identifier and the MAC address corresponding to the STA 1 in a database in the AP or a server, such that each sensing application can query the database or the server based on the custom identifier set for the STA 1 to obtain the MAC address corresponding to the STA 1.

Illustratively, in the case that the third-party configuration program runs in the sensing-by-proxy initiator, the custom identifier of the first device is consistent in the sensing measurements initiated by the sensing-by-proxy initiator. That is, the custom identifier configured by the third-party configuration program in the sensing-by-proxy initiator for the STA 1 is unchanged in all the sensing measurements initiated by the sensing-by-proxy initiator.

**In S2310, a custom identifier of the STA 2 is set based on the TCP/IP protocol.**

Illustratively, after configuring the custom identifier for the STA 2, the third-party configuration program in the sensing-by-proxy initiator transmits, using the TCP/IP protocol, the custom identifier of the STA 2 to the upper-layer application in the STA 2, that is, the third-party configuration program in the STA 2.

For a detailed implementation process of S2310, reference may be made to S2309, which is not repeated herein.

It should be noted that the present disclosure does not limit the order of S2309 and S2310. S2309 may be performed before S2310, S2310 may be performed before S2309, or S2309 and S2310 may be performed concurrently, which is not limited in the present disclosure.

**(2) Mode 2: The custom identifier is generated by the first device.**

Illustratively, the upper-layer application in the first device generates the custom identifier, and sets the custom identifier to the STA management entity in the first device; or, the STA management entity in the first device generates the custom identifier, and sets the custom identifier.

That is, the custom identifier generated by the first device is generated by the upper-layer application or the STA management entity.

Illustratively, in the case that the custom identifier is generated by the STA management entity in the first device, the upper-layer application in the first device obtains the custom identifier (over the internal STA interface).

Illustratively, in the case that the custom identifier is generated by the upper-layer application in the first device, the upper-layer application in the first device sets the custom identifier to the STA management entity in the first device over the internal STA interface.

In some embodiments, the custom identifier is determined based on a random value. That is, the first device generates a random custom identifier upon startup.

In some embodiments, the random value is within a first value range.

In some embodiments, the first value range is set to a larger number to avoid conflicts, such as 655535. That is, the custom identifier is a random value within the range from 0 to 655535.

Illustratively, the upper-layer application in the first device transmits the custom identifier to the third-party application program in the communication mode other than communication modes based on the IEEE 802.11 protocol.

In some embodiments, the upper-layer application in the first device transmits the corresponding relationship between the custom identifier of the first device and the first identification information corresponding to the first device to the third-party application program in the communication mode other than communication modes based on the IEEE 802.11 protocol.

The communication mode other than communication modes based on the IEEE 802.11 protocol includes at least one of: a communication mode based on TCP, a communication mode based on UDP, or a communication mode based on Bluetooth protocol. The communication mode based on the Bluetooth protocol may be based on the Bluetooth protocol or the BLE protocol.

Illustratively, the third-party application program runs in at least one of: a service provider, a sensing initiator, or a sensing-by-proxy initiator. The third-party application program may be present in a mobile phone, an AP, a server, or an STA capable of working for a long time.

In some embodiments, the custom identifier and the first identification information corresponding to the first device are stored in a database or a server. The first identification information includes at least one of a MAC address, an AID, or a USID.

In some embodiments, the custom identifier of the sensing initiator is a default value. For example, the custom identifier of the sensing initiator (for example, an AP device) is 0.

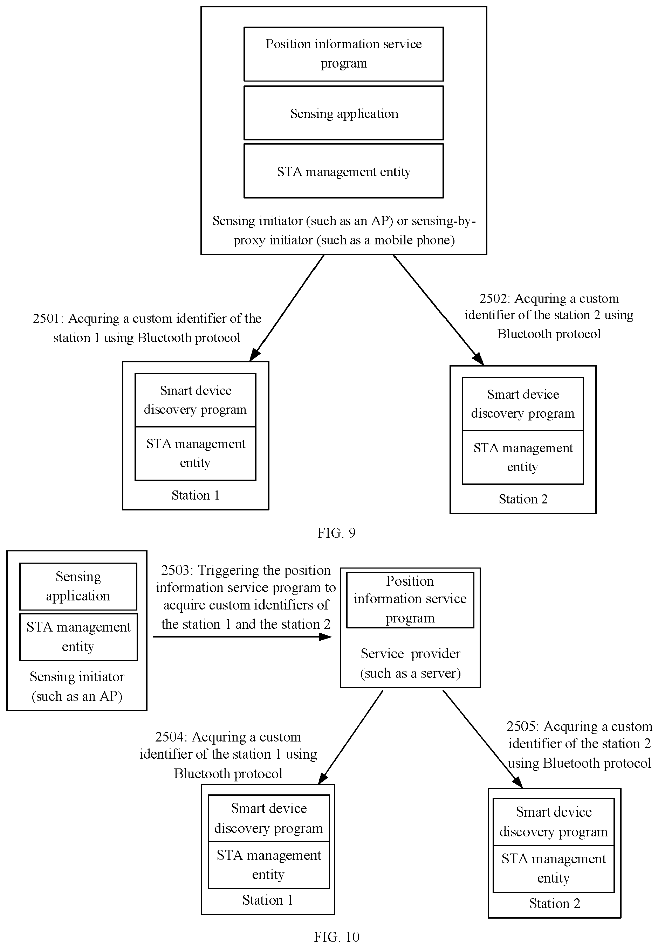

FIGS. 9 to 11 illustrate schematic diagrams of generation of a custom identifier by a first device according to some embodiments of the present disclosure.

FIG. 9 illustrates a schematic diagram of generation of a custom identifier by a first device in the case that the third-party application program runs in a sensing initiator or a sensing-by-proxy initiator, which is illustrated using an example where first devices are the STA 1 and the STA 2.

In the scenario shown in FIG. 9, in the case of a non-sensing by proxy, for the WLAN sensing measurement, the sensing initiator is an AP, and the sensing responders are the STA 1 and the STA 2; and for setting of the custom identifier, the devices that generate the custom identifier are the STA 1 and the STA 2, and the device that obtains the custom identifier is the sensing initiator (for example, an AP).

In the scenario shown in FIG. 9, in the case of a sensing by proxy, the sensing initiator is different from the sensing-by-proxy initiator. For the sensing by proxy, the sensing-by-proxy initiator is the mobile phone, and the sensing-by-proxy responder is the AP; for the WLAN sensing measurement, the sensing initiator is an AP, and the sensing responders are the STA 1 and the STA 2; and for setting of the custom identifier, the devices that generate the custom identifier are the STA 1 and the STA 2, and the device that obtains the custom identifier is the sensing-by-proxy initiator (for example, a mobile phone).

**In S2501, a custom identifier of the STA 1 is acquired using the Bluetooth protocol.**

The custom identifier of the STA 1 is the custom identifier generated by the STA 1 upon the startup of the STA 1.

Illustratively, the STA 1 includes the upper-layer application and the STA management entity, and the upper-layer application and the STA management entity can access each other over the internal STA interface. The upper-layer application in the STA 1 includes a sensing application applicable to the sensing measurement and an application program applicable to generating the custom identifier of the STA 1, such as a smart device discovery program.

Illustratively, the STA management entity in the STA 1 generates the custom identifier, or, the upper-layer application in the STA 1 generates the custom identifier.

Illustratively, in the case that the custom identifier is generated by the STA management entity in the STA 1, the upper-layer application in the STA 1 obtains the custom identifier over the internal STA interface.

Illustratively, in the case that the custom identifier is generated by the upper-layer application in the STA 1, the upper-layer application in the STA 1 sets the custom identifier to the STA management entity in the STA 1 over the internal STA interface.

In some embodiments, the custom identifier is determined based on a random value. That is, the first device generates a random custom identifier upon startup. The random value is within a first value range, such as 655535. That is, the custom identifier is a random value within the range from 0 to 655535.

In the case that the sensing initiator or the sensing-by-proxy initiator needs to establish the sensing measurement, the sensing initiator or the sensing-by-proxy initiator triggers a third-party application program (for example, a position information service program) to obtain, through means other than the IEEE 802.11 protocol, the custom identifier of the STA 1 and/or the corresponding relationship between the custom identifier of the STA 1 and the MAC address of the STA 1.

Illustratively, the position information service program in the sensing initiator or the sensing-by-proxy initiator obtains the custom identifier of the STA 1 using the Bluetooth protocol.

Illustratively, the STA 1 transmits the custom identifier of the STA 1 to the sensing initiator or the sensing-by-proxy initiator using the Bluetooth protocol.

In some embodiments, the sensing initiator or the sensing-by-proxy initiator, after acquiring the above information, stores the custom identifier of the STA 1 and the first identification information corresponding to the STA 1 in a database or a server. The first identification information includes at least one of a MAC address, an AID, or a USID. In this way, the sensing application program can query the database or the server to obtain the MAC address of the STA 1 based on the custom identifier of the STA 1.

**In S2502, a custom identifier of STA 2 is acquired using the Bluetooth protocol.**

Illustratively, the position information service program in the sensing initiator or the sensing-by-proxy initiator obtains the custom identifier of the STA 2 using the Bluetooth protocol.

Illustratively, the STA 2 transmits the custom identifier of the STA 2 to the sensing initiator or the sensing-by-proxy initiator using the Bluetooth protocol.

For a detailed implementation process of S2502, reference may be made to S2501, which is not repeated herein.

It should be noted that the present disclosure does not limit the order of S2501 and S2502. S2501 may be performed before S2502, S2502 may be performed beforeS2501, or S2501 and S2502 may be performed concurrently, which is not limited in the present disclosure.

FIG. 10 illustrates a schematic diagram of generation of a custom identifier by a first device in a non-sensing by proxy scenario where the third-party application program runs in a service provider, which is illustrated using an example where the sensing initiator is the AP, the third-party application program is the position information service program, the custom identifier is transmitted using the Bluetooth protocol, and first devices are the STA 1 and the STA 2.

In the scenario shown in FIG. 10, for the WLAN sensing measurement, the sensing initiator is the AP, and the sensing responders are the STA 1 and the STA 2; and for setting of the custom identifier, the devices that generate the custom identifier are the STA 1 and the STA 2, and the device that obtains the custom identifier is the service provider (for example, a server).

**In S2503, a position information service program is triggered to obtain custom identifiers of STA 1 and STA 2.**

Illustratively, in the case that the sensing initiator needs to establish the sensing measurement, the sensing initiator triggers the third-party application program (for example, the position information service program) in the service provider (for example, a server) to obtain the custom identifiers of the STA 1 and the STA 2.

Using the STA 1 as an example, the custom identifier of the STA 1 is the custom identifier generated by the STA 1 upon the startup of the STA 1.

Illustratively, the STA 1 includes the upper-layer application and the STA management entity, and the upper-layer application and the STA management entity can access each other over the internal STA interface. The upper-layer application in the STA 1 includes an application program applicable to the generating the custom identifier of the STA 1, such as a smart device discovery program.

Illustratively, the STA management entity in the STA 1 generates the custom identifier, or, the upper-layer application in the STA 1 generates the custom identifier.

Illustratively, in the case that the custom identifier is generated by the STA management entity in the STA 1, the upper-layer application in the STA 1 obtains the custom identifier over the internal STA interface.

Illustratively, in the case that the custom identifier is generated by the upper-layer application in the STA 1, the upper-layer application in the STA 1 sets the custom identifier to the STA management entity in the STA 1 over the internal STA interface.

In some embodiments, the custom identifier is determined based on a random value. That is, the first device generates a random custom identifier upon startup. The random value is within a first value range, such as 655535. That is, the custom identifier is a random value within the range of 0 to 655535.

**In S2504, a custom identifier of STA 1 is acquired using the Bluetooth protocol.**

Illustratively, the third-party application program in the service provider obtains, through means other than the IEEE 802.11 protocol, the custom identifier of the first device and/or the corresponding relationship between the custom identifier of the first device and the MAC address of the first device.

Illustratively, the upper-layer application in the first device transmits the custom identifier to the third-party application program in the communication mode other than communication modes based on the IEEE 802.11 protocol.

In some embodiments, the upper-layer application in the first device transmits the corresponding relationship between the custom identifier of the first device and the first identification information corresponding to the first device to the third-party application program in the communication mode other than communication modes based on the IEEE 802.11 protocol.

Illustratively, the position information service program in the server obtains the custom identifier of the STA 1 using the Bluetooth protocol.

Illustratively, the smart device discovery program in the STA 1 transmits the custom identifier of the STA 1 to the position information service program in the server using the Bluetooth protocol.

In some embodiments, the custom identifier of the STA 1 and the first identification information corresponding to the STA 1 are stored in a database or a server. The first identification information includes at least one of a MAC address, an AID, or a USID. In this way, the sensing application program can query the database or the server to obtain the MAC address and the like of the STA 1 based on the custom identifier of the STA 1.

**In S2505, a custom identifier of the STA 2 is acquired using the Bluetooth protocol.**

Illustratively, the position information service program in the server obtains the custom identifier of the STA 2 using the Bluetooth protocol.

Illustratively, the STA 2 transmits the custom identifier of the STA 2 to the position information service program in the server using the Bluetooth protocol.

For a detailed implementation process of S2505, reference may be made to S2504, which is not repeated herein.

It should be noted that the present disclosure does not limit the order of S2504 and S2505. S2504 may be performed before S2505, S2505 may be performed before S2504, or, S2504 and S2505 may be performed concurrently, which is not limited in the present disclosure.

In addition, it should be noted that in some embodiments, S2404 to S2405 are performed before S2503. That is, after the first device generates the custom identifier, the service provider obtains the custom identifier generated by the first device using the Bluetooth protocol or other means and stores the custom identifier in a database or a server, and the service provider queries the database or the server to obtain the custom identifier of the first device in the case that the sensing initiator needs to establish the sensing measurement. The order of the processes in the embodiments of the present disclosure is not limited in the present disclosure.

In addition, it should be further noted that in some embodiments, S2404 to S2405 do not need to be performed. For example, in the case that the service provider has already acquired the custom identifier of the STA before the sensing measurement instance, S2404 to S2405 do not need to be performed in the sensing measurement instance.

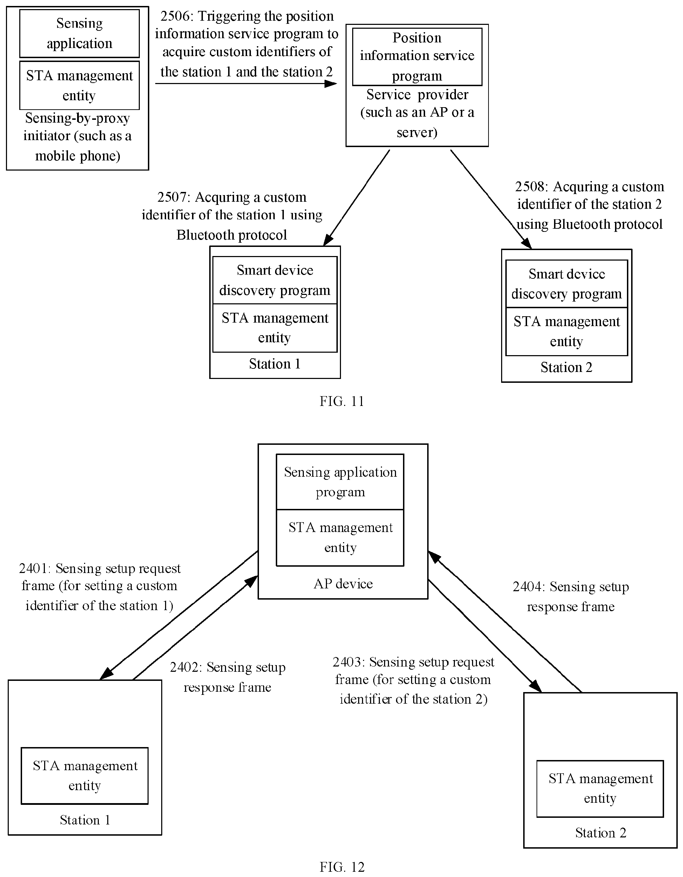

FIG. 11 illustrates a schematic diagram of generation of a custom identifier by a first device in a sensing by proxy scenario where the third-party application program runs in a service provider, which is illustrated using an example where the sensing-by-proxy initiator is the mobile phone, a third-party application program is the position information service program, the custom identifier is transmitted using the Bluetooth protocol, and first devices are the STA 1 and the STA 2.

In the scenario shown in FIG. 11, in the case of a sensing by proxy, the sensing-by-proxy initiator is the mobile phone, and the sensing-by-proxy responder is the AP; for the WLAN sensing measurement, the sensing initiator is the AP, and the sensing responders are the STA 1 and the STA 2; and for setting of the custom identifier, the devices that generate the custom identifier are the STA 1 and the STA 2, and the device that obtains the custom identifier is the service provider (for example, a server or an AP).

**In S2506, a position information service program is triggered to obtain custom identifiers of STA 1 and STA 2.**

Illustratively, in the case that the sensing-by-proxy initiator, needs to establish the sensing measurement, the sensing-by-proxy initiator triggers the third-party application program (for example, the position information service program) in the service provider (for example, a server) to obtain the custom identifiers of the STA 1 and the STA 2.

Using the STA 1 as an example, the custom identifier of the STA 1 is the custom identifier generated by the STA 1 upon the startup of the STA 1.

Illustratively, the STA 1 includes the upper-layer application and the STA management entity, and the upper-layer application and the STA management entity can access each other over the internal STA interface. The upper-layer application in the STA 1 includes an application program applicable to the generating the custom identifier of the STA 1, such as a smart device discovery program.

Illustratively, the STA management entity in the STA 1 generates the custom identifier, or, the upper-layer application in the STA 1 generates the custom identifier.

Illustratively, in the case that the custom identifier is generated by the STA management entity in the STA 1, the upper-layer application in the STA 1 obtains the custom identifier over the internal STA interface.

Illustratively, in the case that the custom identifier is generated by the upper-layer application in the STA 1, the upper-layer application in the STA 1 sets the custom identifier to the STA management entity in the STA 1 over the internal STA interface.

In some embodiments, the custom identifier is determined based on a random value. That is, the first device generates a random custom identifier upon startup. The random value is within a first value range, such as 655535. That is, the custom identifier is a random value within the range from 0 to 655535.

**In S2507, a custom identifier of the STA 1 is acquired using the Bluetooth protocol.**

Illustratively, the third-party application program in the service provider obtains, through means other than the IEEE 802.11 protocol, the custom identifier of the first device and/or the corresponding relationship between the custom identifier of the first device and the MAC address of the first device.

Illustratively, the upper-layer application in the first device transmits the custom identifier to the third-party application program in the communication mode other than communication modes based on the IEEE 802.11 protocol.

In some embodiments, the upper-layer application in the first device transmits the corresponding relationship between the custom identifier of the first device and the first identification information corresponding to the first device to the third-party application program in the communication mode other than communication modes based on the IEEE 802.11 protocol.

Illustratively, the position information service program in the server obtains the custom identifier of the STA 1 using the Bluetooth protocol.

Illustratively, the smart device discovery program in the STA 1 transmits the custom identifier of the STA 1 to the position information service program in the server using the Bluetooth protocol.

In some embodiments, the custom identifier of the STA 1 and the first identification information corresponding to the STA 1 are stored in a database or a server. The first identification information includes at least one of a MAC address, an AID, or a USID. In this way, the sensing application program can query the database or the server to obtain the MAC address and the like of the STA 1 based on the custom identifier of the STA 1.

**In S2508, a custom identifier of the STA 2 is acquired using the Bluetooth protocol.**

Illustratively, the position information service program in the server obtains the custom identifier of the STA 2 using the Bluetooth protocol.

Illustratively, the STA 2 transmits the custom identifier of the STA 2 to the position information service program in the server using the Bluetooth protocol.

For a detailed implementation process of S2508, reference may be made to S2507, which is not repeated herein.

It should be noted that the present disclosure does not limit the order of S2507 and S2508. S2507 may be performed before S2508, S2508 may be performed before S2507, or, S2507 and S2508 may be performed concurrently, which is not limited in the present disclosure.

In addition, it should be noted that in some embodiments, S2407 to S2408 are performed before S2506. That is, after the first device generates the custom identifier, the service provider obtains the custom identifier generated by the first device using the Bluetooth protocol or other means and stores the custom identifier in a database or a server, and the service provider queries the database or the server to obtain the custom identifier of the first device in the case that the sensing-by-proxy initiator needs to establish the sensing measurement. The order of the processes in the embodiments of the present disclosure is not limited in the present disclosure.

In addition, it should be further noted that in some embodiments, S2407 to S2408 do not need to be performed. For example, in the case that the service provider has already acquired the custom identifier of the STA before the sensing measurement instance, S2407 to S2408 do not need to be performed in the sensing measurement instance.

**(3) Mode 3: The custom identifier is configured by the sensing application program for the first device.**

Unlike the third-party configuration program in the Mode 1, the sensing application program in the Mode 3 is an application program specific to the WLAN sensing.

Illustratively, the sensing application program obtains a MAC address of the first device in advance through means other than the IEEE 802.11 protocol and generates the custom identifier for the first device.

Illustratively, the first device receives the custom identifier configured by the sensing application program for the first device; or receives the sensing setup request frame, where the sensing setup request frame carries the custom identifier of the first device. That is, the upper-layer application of the STA obtains the custom identifier of the first device through means other than the IEEE 802.11 protocol; or, the first device receives the sensing setup request frame to obtain the custom identifier of the first device.

Illustratively, the sensing application program runs in at least one of a sensing initiator, a sensing-by-proxy initiator, a sensing-by-proxy responder, or an AP device.

Illustratively, the sensing setup request frame is transmitted by at least one of a sensing initiator, a sensing-by-proxy responder, or an AP device.

FIGS. 12 to 15 illustrate schematic diagrams of configuration of a custom identifier by a sensing application program for a first device according to some embodiments of the present disclosure.

FIG. 12 illustrates a schematic diagram of configuration of a custom identifier by a sensing application program for a first device in a non-sensing by proxy scenario where the sensing application program is in an AP device, which is illustrated using an example where first devices are the STA 1 and the STA 2.

In the scenario shown in FIG. 12, for the WLAN sensing measurement, the sensing initiator is the AP device, and the sensing responders are the STA 1 and the STA 2; and for setting of the custom identifier, the device that sets the custom identifier is the AP device, and devices that receive the configured custom identifiers are the STA 1 and the STA 2.

**In S2401, an AP device transmits a sensing setup request frame to the STA 1.**

Illustratively, the sensing application program in the AP device obtains the MAC address of the STA 1 in advance through means other than the IEEE 802.11 protocol and generates the custom identifier for the STA 1. The means other than the IEEE 802.11 protocol may be TCP, UDP, Bluetooth protocol, or the like.

Illustratively, the sensing application program in the AP device, after generating the custom identifier for the STA 1, sets the custom identifier of the STA 1 and the MAC address of the STA 1 to the STA management entity in the AP device over the internal STA interface of the AP device, and the STA management entity transmits the sensing setup request frame to the STA 1.

Illustratively, the sensing setup request frame carries the custom identifier set by the sensing application program in the AP device for the STA 1. The sensing setup request frame is for setting the custom identifier of the STA 1.

In some embodiments, the custom identifier of the AP device is a default value, for example, 0.

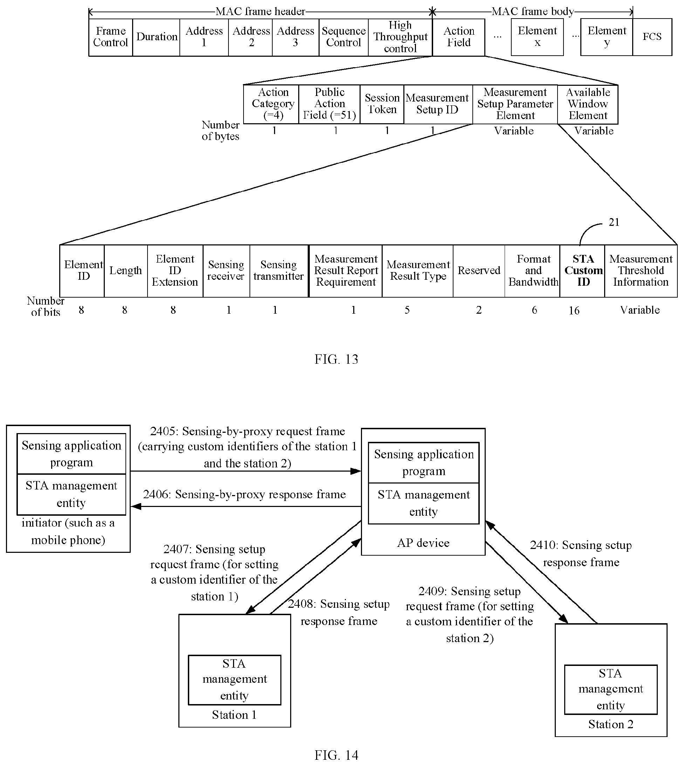

FIG. 13 illustrates a sensing setup request frame according to some embodiments of the present disclosure.

Illustratively, the sensing setup request frame includes a MAC frame header and a MAC frame body. The MAC frame body includes an Action field, the Action field includes a Measurement Setup Parameter Element field, and the Measurement Setup Parameter element includes an STA Custom ID 21, which occupies 16 bits and is for carrying the custom identifier of the first device.

In some embodiments, the STA Custom ID 21 is carried in the Measurement Setup Parameter Element field of the sensing setup request frame or another part. The position of the STA Custom ID in the sensing setup request frame is not limited in the present disclosure.

**In S2402, the STA 1 transmits a sensing setup response frame to the AP device.**

The STA 1, after receiving the sensing setup request frame transmitted by the AP device, obtains the custom identifier of the STA 1, and transmits the sensing setup response frame to the AP device to confirm receipt of the custom identifier.

**In S2403, the AP device transmits a sensing setup request frame to the STA 2.**

Illustratively, the sensing application program in the AP device, after generating the custom identifier for the STA 2, sets the custom identifier of the STA 2 and the MAC address of the STA 2 to the STA management entity in the AP device over the internal STA interface of the AP device, and the STA management entity transmits the sensing setup request frame to the STA 2.

For a detailed implementation process, reference may be made to S2401, which is not repeated herein.

**In S2404, the STA 2 transmits a sensing setup response frame to the AP device.**

The STA 2, after receiving the sensing setup request frame transmitted by the AP device, obtains the custom identifier of the STA 2, and transmits the sensing setup response frame to the AP device to confirm receipt of the custom identifier.

It should be noted that the present disclosure does not limit the order of S2401 to S2402 and S2403 to S2404. S2401 to S2402 may be performed before S2403 to S2404, S2403 to S2404 may be performed before S2401 to S2402, or, S2401 to S2402 and S2403 to S2404 may be performed concurrently, which is not limited in the present disclosure.

FIG. 14 illustrates a schematic diagram of configuration of a custom identifier by a sensing application program for a first device in a sensing by proxy scenario where the sensing application program is in a sensing-by-proxy initiator, which is illustrated using an example where first devices are the STA 1 and the STA 2.

In the scenario shown in FIG. 14,for the sensing by proxy, the sensing-by-proxy initiator is the mobile phone, and the sensing-by-proxy responder is the AP, for the WLAN sensing measurement, the sensing initiator is the AP device, and the sensing responders are the STA 1 and the STA 2; and for setting of the custom identifier, the device that sets the custom identifier is the sensing-by-proxy initiator (for example, a mobile phone), and the devices that receive the configured custom identifiers are the STA 1 and the STA 2.

**In S2405, a sensing-by-proxy initiator transmits a sensing-by-proxy request frame to the AP device.**

Illustratively, the sensing application program in the sensing-by-proxy initiator (for example, a mobile phone) obtains the MAC address of the first device in advance through means other than the IEEE 802.11 protocol and generates the custom identifier for the first device. The means other than the IEEE 802.11 protocol may be TCP, UDP, Bluetooth protocol, or the like.

Illustratively, the sensing application program in the sensing-by-proxy initiator, after generating the custom identifier for the first device, sets the custom identifier of the first device and the MAC address of the first device to the STA management entity in the sensing-by-proxy initiator over the internal STA interface of the sensing-by-proxy initiator, and the STA management entity transmits the sensing-by-proxy request frame to the AP device.

Illustratively, the sensing-by-proxy request frame carries the custom identifier of the first device, that is, the custom identifiers of the STA 1 and the STA 2. The sensing-by-proxy request frame is for transmitting the custom identifiers of the STA 1 and the STA 2 to the AP device and setting the custom identifiers to the STA 1 and the STA 2 via the AP device.

In some embodiments, the sensing-by-proxy request frame carries the custom identifier of the first device and the MAC address of the first device.

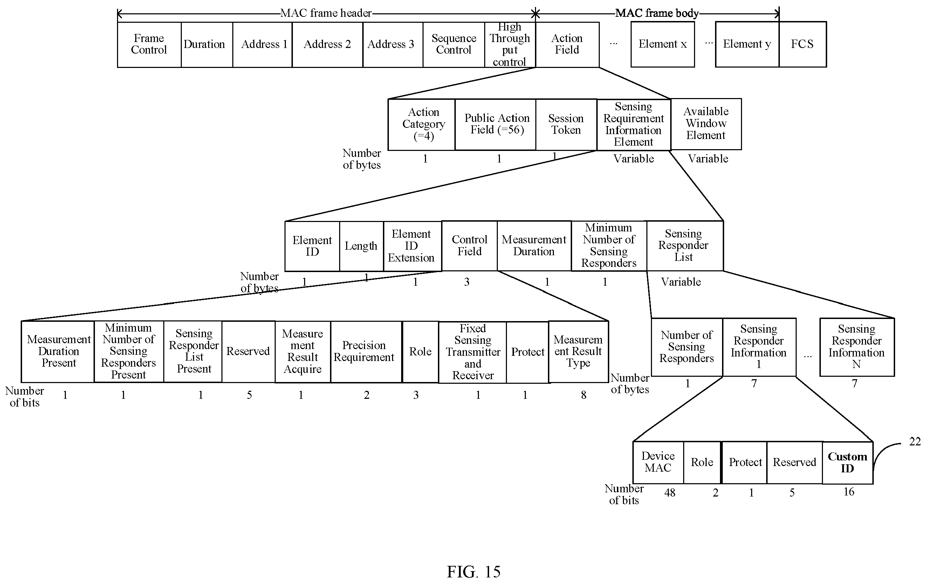

FIG. 15 illustrates a sensing-by-proxy request frame according to some embodiments of the present disclosure.

Illustratively, the sensing-by-proxy request frame includes a MAC frame header and a MAC frame body. The MAC frame body includes an Action field, the Action field includes a Sensing Requirement Information Element field, and the Sensing Requirement Information Element field includes a Sensing Responders List field. The Sensing Responders List field includes Sensing Responder Information fields corresponding to various sensing responders, and the Sensing Responder Information field includes a Custom Identifier field 22 corresponding to the sensing responder, which occupies 16 bits and is for carrying the custom identifier of the first device.

In some embodiments, the Custom ID field is carried in the Sensing Responder Information field of the sensing-by-proxy request frame or another part. The position of the custom identifier in the sensing-by-proxy request frame is not limited in the present disclosure.

**In S2406, the AP device transmits a sensing-by-proxy response frame to the sensing-by-proxy initiator.**

Illustratively, the AP device is a sensing-by-proxy responder in the sensing by proxy scenario. The AP device, after receiving the sensing-by-proxy request frame, obtains the MAC address and the custom identifier of the first device and stores the MAC address and the custom identifier in the database of the AP device.

Illustratively, the AP device, after receiving the sensing-by-proxy request frame, transmits the sensing-by-proxy response frame to the sensing-by-proxy initiator to indicate that the sensing-by-proxy request frame has been received.

**In S2407, the AP device transmits a sensing setup request frame to the STA 1.**

Illustratively, the AP device, after receiving the custom identifier of the STA 1 from the sensing-by-proxy initiator, transmits the sensing setup request frame to the STA 1. The sensing setup request frame carries the custom identifier of the STA 1, and the sensing setup request frame is for setting the custom identifier of the STA 1.

**In S2408, the STA 1 transmits a sensing setup response frame to the AP device.**

The STA 1, after receiving the sensing setup request frame transmitted by the AP device, obtains the custom identifier of the STA 1, and transmits the sensing setup response frame to the AP device to confirm receipt of the custom identifier.

**In S2409, the AP device transmits a sensing setup request frame to the STA 2.**

Illustratively, the AP device, after receiving the custom identifier of the STA 2 from the sensing-by-proxy initiator, transmits the sensing setup request frame to the STA 2. The sensing setup request frame carries the custom identifier of the STA 2, and the sensing setup request frame is for setting the custom identifier of the STA 2.

**In S2410, the STA 2 transmits a sensing setup response frame to the AP device.**

The STA 2, after receiving the sensing setup request frame transmitted by the AP device, obtains the custom identifier of the STA 2, and transmits the sensing setup response frame to the AP device to confirm receipt of the custom identifier.

It should be noted that the present disclosure does not limit the order of S2407 to S2408 and S2409 to S2410. S2407 to S2408 may be performed before S2409 to S2410, S2409 to S2410 may be performed before S2407 to S2408, or, S2407 to S2408 and S2409 to S2410 may be performed concurrently, which is not limited in the present disclosure.

In summary, in the technical solutions according to the embodiments of the present disclosure, the first device identifies its identity in the WLAN sensing process by acquiring the corresponding custom identifier, such that the sensing signal is properly received in the sensing measurement process, and the sensing precision is improved.

The Mode 3 in the above embodiments illustrates the method for configuring the custom identifier for the first device by the sensing application program, which is described hereinafter from the perspective of a second device where the sensing application program is disposed.

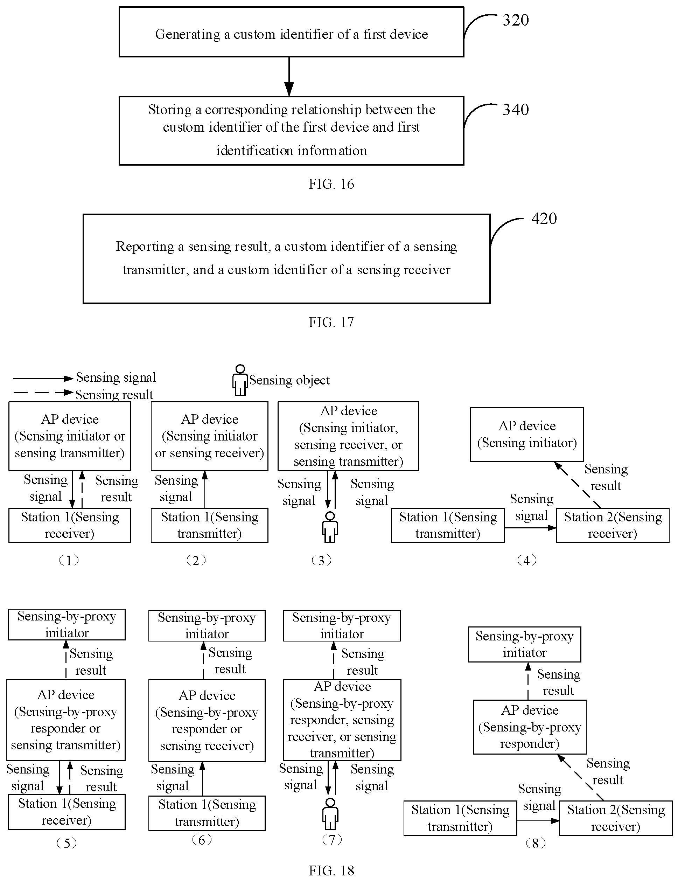

FIG. 16 illustrates a flowchart of a method for generating a custom identifier according to some embodiments of the present disclosure. The method is applicable to a second device. The second device is at least one of a sensing initiator, a sensing-by-proxy responder, or an AP device. The method includes the following processes.

**In S320, a custom identifier of a first device is generated.**

The custom identifier is for identifying the identity of the sensing participant in the WLAN sensing process and/or in the WLAN sensing result. That is, the identity of the sensing participant is the identity of the first device in the embodiments of the present disclosure.

Illustratively, the sensing application program in the second device generates the custom identifier of the first device. The sensing application program is an application program specific to the WLAN sensing.

Illustratively, the second device obtains the MAC address of the first device in advance through means other than the IEEE 802.11 protocol and generates the custom identifier for the first device. The means other than the IEEE 802.11 protocol may be TCP, UDP, Bluetooth protocol, or the like.

Illustratively, the second device includes the sensing initiator, the sensing-by-proxy responder, or the AP device.

Illustratively, the second device includes the sensing-by-proxy initiator or the STA device..

**In S340, a corresponding relationship between the custom identifier of the first device and first identification information is stored.**

The first identification information includes at least one of a MAC address, an AID, or a USID.

Illustratively, the sensing application program in the second device stores the corresponding relationship between the custom identifier of the first device and the first identification information in the STA management entity in the second device.

Illustratively, the upper-layer application of the second device and the STA management entity access each other over the internal device interface.

Illustratively, the sensing application program in the second device stores the corresponding relationship between the custom identifier of the first device and the first identification information in the STA management entity in the second device over the internal device interface.

In some embodiments, in the case that the second device includes the sensing initiator, the sensing-by-proxy responder, or the AP device, the custom identifier is transmitted to the first device.

In some embodiments, the mode in which the second device transmits the custom identifier to the first device involves transmitting the custom identifier to the first device via the sensing application program, or transmitting the custom identifier to the first device through the sensing setup request frame.

In some embodiments, in the case that the second device includes the sensing-by-proxy initiator or the STA device, the second device transmits the corresponding relationship between the custom identifier of the first device and the first identification information to the sensing-by-proxy responder or the AP device. Reference may be made to the above embodiment corresponding to FIG. 14.

In some embodiments, the second device transmits the sensing-by-proxy request frame to the sensing-by-proxy responder or the AP device. The sensing-by-proxy request frame includes the corresponding relationship between the custom identifier of the first device and the first identification information.

In summary, in the technical solutions according to the embodiments of the present disclosure, the second device generates the custom identifier of the first device using the sensing application program, such that the first device is identified by the custom identifier in the WLAN sensing process. Thus, the proper receipt of signals and proper determination of sensing results in the sensing process can be ensured. The corresponding relationship between the custom identifier of the first device and the first identification information is stored, such that the custom identifiers of the sensing transmitter and the sensing receiver corresponding to the sensing result can be acquired by querying the stored corresponding relationship in the subsequent sensing result reporting process, and the sensing application program can properly correspond the sensing result to the position information of the sensing participant to assist in improving the sensing precision.

The setting processes of the custom identifier are described in detail in the above embodiments. A method for using a custom identifier is described hereinafter.

FIG. 17 illustrates a flowchart of a method for using a custom identifier according to some embodiments of the present disclosure. The method is applicable to a third device. The third device is at least one of a sensing initiator, a sensing-by-proxy responder, a sensing responder, a sensing transmitter, or a sensing receiver in a sensing measurement. For example, the third device is an AP device. The method includes the following processes.

**In S420, a sensing result, a custom identifier of a sensing transmitter, and a custom identifier of a sensing receiver are reported.**

Illustratively, the custom identifier is for identifying the identity of the sensing participant in the WLAN sensing process and/or in the WLAN sensing result. The sensing participant includes the sensing transmitter and the sensing receiver.

Illustratively, the sensing transmitter and the sensing receiver correspond to the sensing result.

Illustratively, the sensing result, the custom identifier of the sensing transmitter, and the custom identifier of the sensing receiver are reported to the sensing application program in the third device; or, the sensing result, the custom identifier of the sensing transmitter, and the custom identifier of the sensing receiver are forwarded to the sensing-by-proxy requester through a sensing-by-proxy report frame.

That is, in a non-sensing by proxy scenario, the third device is the sensing initiator, and the sensing result, the custom identifier of the sensing transmitter, and the custom identifier of the sensing receiver are reported to the sensing application program in the third device; in a sensing by proxy scenario, the third device is the sensing-by-proxy responder, and the third device forwards the sensing result, the custom identifier of the sensing transmitter, and the custom identifier of the sensing receiver to the sensing-by-proxy requester through the sensing-by-proxy report frame.

In some embodiments, the sensing setup response frame is received. The sensing setup response frame carries the custom identifier of the sensing participant. For example, the STA reports the custom identifier of the STA by transmitting the sensing setup response frame to the third device.

FIG. 18 is a schematic diagram of a typical scenario of using a custom identifier according to some embodiments of the present disclosure. Using an example where the third device is an AP device, FIGS. 18(1) to (4) respectively illustrate four typical scenarios of a sensing measurement of the non-sensing by proxy, and FIGS. 18(5) to (8) respectively illustrate four typical scenarios of a sensing measurement of the sensing by proxy.

In some embodiments, as shown in FIG. 18(1), the AP device is the sensing initiator or the sensing transmitter, and the STA 1 is the sensing receiver. After the AP device initiates the sensing measurement, the sensing signal is transmitted by the AP device and received by the STA 1, and the STA 1 reports the sensing result to the AP device.

In some embodiments, as shown in FIG. 18(2), the AP device is the sensing initiator or the sensing receiver, and the STA 1 is the sensing transmitter. After the AP device initiates the sensing measurement, the sensing signal is transmitted by the STA 1 and received by the AP device.

In some embodiments, as shown in FIG. 18(3), the AP device is the sensing initiator, the sensing transmitter, or the sensing receiver. After the AP device initiates the sensing measurement, the sensing signal is transmitted by the AP device and returned to the AP device via a sensing object, and the AP device receives the sensing signal.

In some embodiments, as shown in FIG. 18(4), the AP device is the sensing initiator. After the AP device initiates the sensing measurement, the sensing signal is transmitted by the STA 1 and received by the STA 2, and the STA 2 reports the sensing result to the AP device.

In some embodiments, as shown in FIG. 18(5), the AP device is the sensing-by-proxy responder or the sensing transmitter. After the AP device initiates a sensing measurement, the sensing signal is transmitted by the AP device and received by the STA 1, the STA 1 reports the sensing result to the AP device, and the AP device forwards the sensing result to the sensing-by-proxy initiator.

In some embodiments, as shown in FIG. 18(6), the AP device is the sensing-by-proxy responder or the sensing receiver. After the AP device initiates the sensing measurement, the sensing signal is transmitted by the STA 1 and received by the AP device, and the AP device forwards the sensing result to the sensing-by-proxy initiator.

In some embodiments, as shown in FIG. 18(7), the AP device is the sensing-by-proxy responder, the sensing receiver, or the sensing transmitter. After the AP device initiates the sensing measurement, the sensing signal is transmitted by the AP device and is returned to the AP device via a sensing object, and the AP device receives the sensing signal, and the AP device forwards the sensing result to the sensing-by-proxy initiator.

In some embodiments, as shown in FIG. 18(8), the AP device is the sensing-by-proxy responder. After the AP device initiates a sensing measurement, the sensing signal is transmitted by the STA 1 and received by the STA 2, the STA 2 reports the sensing result to the AP device, and the AP device forwards the sensing result to the sensing-by-proxy initiator.

**Method 1: A third device (for example, an AP device) is a sensing transmitter corresponding to a sensing result.**

Illustratively, the sensing measurement report frame is received. The sensing measurement report frame carries the sensing result and the custom identifier of the sensing receiver.

Illustratively, the custom identifier of the sensing transmitter is set as the custom identifier of the third device, or, a default value is set as the custom identifier of the third device.

Illustratively, after the custom identifier of the AP device is determined, the sensing result, the custom identifier of the sensing transmitter, and the custom identifier of the sensing receiver are reported to the sensing application program in the AP device; or, the sensing result, the custom identifier of the sensing transmitter, and the custom identifier of the sensing receiver are forwarded to the sensing-by-proxy requester through the sensing-by-proxy report frame.

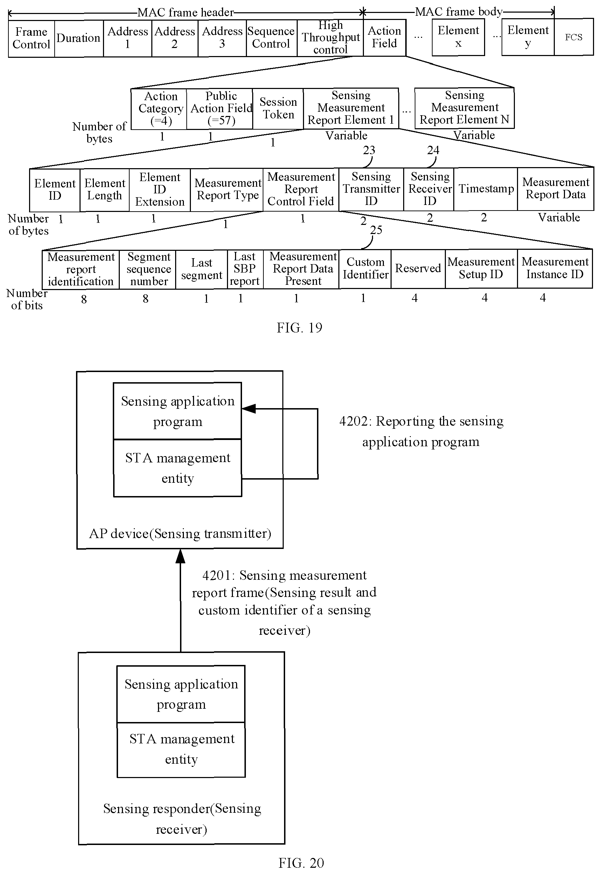

Illustratively, FIG. 19 illustrates a schematic structural diagram of a sensing measurement report frame according to some embodiments of the present disclosure. As shown in the drawing, the sensing measurement report frame includes a MAC frame header and a MAC frame body. The MAC frame body includes an Action field, the Action field includes a Sensing Measurement Report Element field corresponding to a sensing measurement instance, and the Sensing Measurement Report Element field includes a Sensing Transmitter ID field (the custom identifier) 23 (occupying 2 bytes) and a Sensing Receiver ID field (the custom identifier) 24 (occupying 2 bytes) corresponding to the sensing measurement instance. Moreover, a Measurement Report Control field includes a Custom ID field 25 (occupying 1 bit).

In some embodiments, the Sensing Transmitter ID field 23 (the custom identifier) and the Sensing Transmitter ID field (the custom identifier) 24 are carried in the Sensing Measurement Report Element field of the sensing measurement report frame; or, the fields are carried in another part. The position of the custom identifier in the sensing measurement report frame is not limited in the present disclosure.

FIG. 20 illustrates a method for using a custom identifier in a sensing measurement process according to some embodiments of the present disclosure. The sensing measurement process includes the third device (AP device) and the sensing responder (STA). Reference may be made to the scenario in FIG. 18(1).

**In S4201, a sensing responder transmits a sensing measurement report frame to an AP device.**

Illustratively, the sensing responder is also the sensing receiver, and the AP device is also the sensing transmitter.

Illustratively, the sensing responder transmits the sensing measurement report frame to the AP device, and the sensing measurement report frame includes the sensing result measured by the sensing responder and the custom identifier of the sensing responder (the sensing receiver).

**In S4202, the AP device reports to a sensing application program.**

In some embodiments, the AP device, after receiving the sensing measurement report frame, sets the custom identifier of the sensing transmitter corresponding to the sensing result as the custom identifier of the AP device.

In some embodiments, the custom identifier of the AP device is a default value, for example, 0. In this case, the sensing measurement report frame includes the sensing result, the custom identifier of the sensing receiver, and the custom identifier of the sensing transmitter (that is, a default value, for example, 0) in some embodiments, and the AP device sets the custom identifier of the sensing transmitter to a default value. Illustratively, the AP device, after determining the custom identifier of the sensing transmitter, reports the sensing result, the custom identifier of the sensing transmitter, and the custom identifier of the sensing receiver to the sensing application program in the AP device. For example, the sensing result, the custom identifier of the sensing transmitter, and the custom identifier of the sensing receiver are reported to the sensing application program in the AP device over the internal device interface of the AP device.

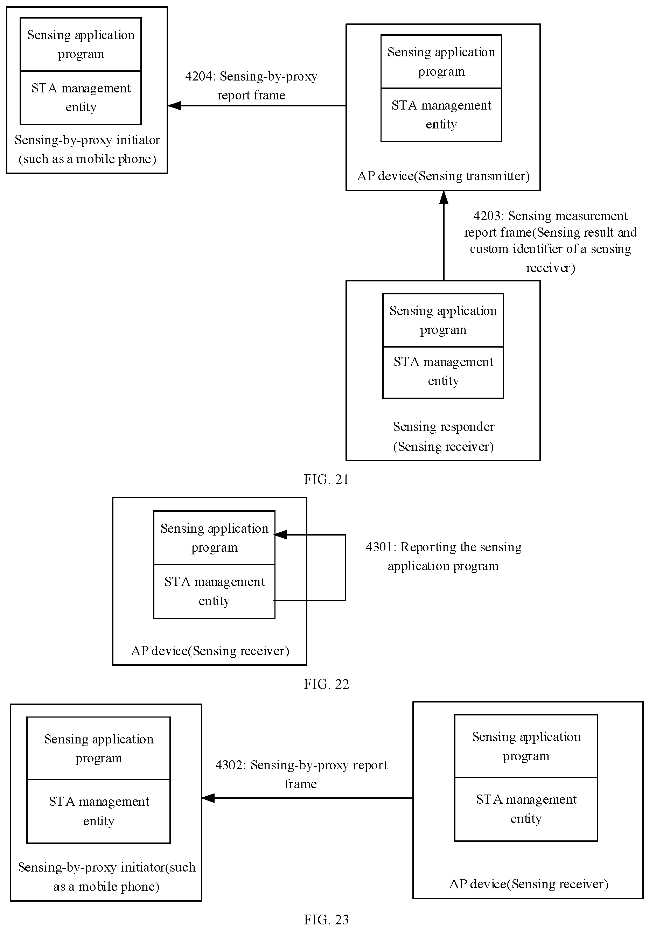

FIG. 21 illustrates a method for using a custom identifier in a sensing measurement process according to some embodiments of the present disclosure. The sensing measurement process includes the sensing-by-proxy initiator, the AP device, and the sensing responder (an STA). Reference may be made to the scenario in FIG. 18(5).

**In S4203, the sensing responder transmits a sensing measurement report frame to the AP device.**

Illustratively, the sensing responder is also the sensing receiver, and the AP device is also the sensing transmitter and the sensing-by-proxy responder.

Illustratively, the sensing responder transmits the sensing measurement report frame to the AP device, and the sensing measurement report frame includes the sensing result measured by the sensing responder and the custom identifier of the sensing responder (the sensing receiver).

**In S4204, the AP device transmits a sensing-by-proxy report frame to a sensing-by-proxy initiator.**

In some embodiments, the AP device, after receiving the sensing measurement report frame, sets the custom identifier of the sensing transmitter corresponding to the sensing result as the custom identifier of the AP device.

In some embodiments, the custom identifier of the AP device is a default value, for example, 0. In this case, in some embodiments, the sensing measurement report frame includes the sensing result, the custom identifier of the sensing receiver, and the custom identifier of the sensing transmitter (that is, a default value, for example, 0), and the AP device sets the custom identifier of the sensing transmitter to a default value. Illustratively, the AP device, after determining the custom identifier of the sensing transmitter, reports the sensing result, the custom identifier of the sensing transmitter, and the custom identifier of the sensing receiver to the sensing-by-proxy initiator.

Illustratively, the AP device forwards the sensing result, the custom identifier of the sensing transmitter, and the custom identifier of the sensing receiver to the sensing-by-proxy requester through the sensing-by-proxy report frame.

**Method 2: A third device (for example, an AP device) is a sensing receiver corresponding to a sensing result.**

Illustratively, the AP device receives the sensing setup response frame transmitted by the sensing transmitter, and the sensing setup response frame carries the custom identifier of the sensing transmitter.

FIG. 22 illustrates a method for using a custom identifier in a sensing measurement process according to some embodiments of the present disclosure. The sensing measurement process includes the AP device. Reference may be made to the scenario in FIG. 18(2) or (3).

**In S4301, the AP device reports to the sensing application program.**

Illustratively, for FIG. 18(2), the AP device, as the sensing receiver, receives the sensing signal transmitted by the sensing responder (the sensing transmitter). In this case, the AP device reports the generated sensing signal, the custom identifier of the AP device (that is, the custom identifier of the sensing receiver), and the custom identifier of the sensing transmitter to the sensing application program.

Illustratively, for FIG. 18(3), the AP device functions as both the sensing transmitter and the sensing receiver. In this case, the AP device reports the generated sensing signal, the custom identifier of the AP device (the custom identifiers of both the sensing receiver and the sensing transmitter) to the sensing application program.

In some embodiments, for FIG. 18(2), the AP device needs to know the custom identifier of the sensing transmitter in advance. For example, the AP device receives the sensing setup response frame transmitted by the sensing transmitter, and the sensing setup response frame carries the custom identifier of the sensing transmitter.

Illustratively, the AP device reports the sensing result, the custom identifier of the sensing transmitter, and the custom identifier of the sensing receiver to the sensing application program in the AP device. For example, the sensing result, the custom identifier of the sensing transmitter, and the custom identifier of the sensing receiver are reported to the sensing application program in the AP device over the internal device interface of the AP device.

FIG. 23 illustrates a method for using a custom identifier in a sensing measurement process according to some embodiments of the present disclosure. The sensing measurement process includes the sensing-by-proxy initiator and the AP device. Reference may be made to the scenario in FIG. 18(6) or (7).

**In S4302, the AP device transmits a sensing-by-proxy report frame to the sensing-by-proxy initiator.**

Illustratively, for FIG. 18(6), the AP device, as the sensing receiver, receives the sensing signal transmitted by the sensing responder (the sensing transmitter). In this case, the AP device reports the generated sensing signal, the custom identifier of the AP device (that is, the custom identifier of the sensing receiver), and the custom identifier of the sensing transmitter device to the sensing application program in the sensing-by-proxy initiator.

Illustratively, for FIG. 18(7), the AP device functions as both the sensing transmitter and the sensing receiver. In this case, the AP device reports the generated sensing signal and the custom identifier of the AP device (the custom identifiers of both the sensing receiver and the sensing transmitter) to the sensing application program in the sensing-by-proxy initiator.

In some embodiments, for FIG. 18(6), the AP device needs to know the custom identifier of the sensing transmitter in advance. For example, the AP device receives the sensing setup response frame transmitted by the sensing receiver, and the sensing setup response frame carries the custom identifier of the sensing receiver.

Illustratively, the AP device reports the sensing result, the custom identifier of the sensing transmitter, and the custom identifier of the sensing receiver to the sensing-by-proxy initiator.

Illustratively, the AP device forwards the sensing result, the custom identifier of the sensing transmitter, and the custom identifier of the sensing receiver to the sensing-by-proxy requester through the sensing-by-proxy report frame.

**Method 3: A third device (for example, an AP device) has known the corresponding relationship between the custom identifier of a first device and the second identification information of the first device at a sensing measurement phase.**

Illustratively, the Method 3 is applicable to at least one of the following cases: the third device (for example, an AP device) is not the sensing transmitter or the sensing receiver corresponding to the sensing result, an STA-STA sensing measurement instance is included; or the AP device stores the corresponding relationship between the custom identifier and the second identification information. The second identification information includes at least one of an AID or a USID.

Illustratively, in the Method 3 for using the custom identifier, the AP device is required to know the corresponding relationship between the custom identifier of the first device and the second identification information of the first device in the sensing measurement phase. Therefore, the AP device obtains the corresponding relationship in the setting process of the custom identifier, or obtains the corresponding relationship in the sensing setup phase through the sensing setup response frame that is transmitted by each STA and carries the custom identifier of the STA.

That is, the corresponding relationship is acquired in the setting process of the custom identifier; or, the corresponding relationship is acquired based on the sensing setup response frame transmitted by the STA, and the sensing setup response frame carries the custom identifier of the STA.

That is, in the above method for acquiring the custom identifier, in the Method 3 (the sensing application program configures the custom identifier for the first device), the AP device obtains the custom identifier of each STA and the corresponding relationship between the custom identifier and the second identification information in the setting process of the custom identifier. However, in the Method 1 (the third-party configuration application program configures the custom identifier for the first device) and the Method 2 (the first device generates the custom identifier), the AP device does not know the custom identifier of each STA in the setting process of the custom identifier, and thus needs to obtain the corresponding relationship by receiving the sensing setup response frame that is transmitted by each STA and carries the custom identifier of the STA.

Illustratively, the AP device stores a corresponding relationship between the custom identifier of the first device and the MAC address of the first device in the setting process of the custom identifier or based on the sensing setup response frame transmitted by the STA, and then obtains the corresponding relationship between the custom identifier of the first device and the second identification information of the first device based on a corresponding relationship between the MAC address of the first device and the identification information of the first device.

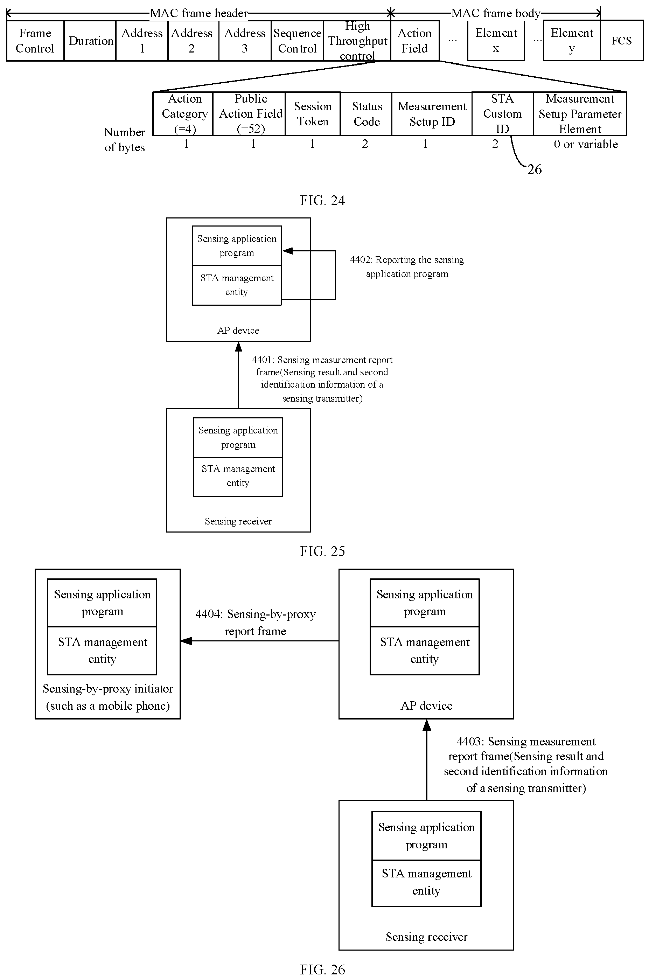

FIG. 24 illustrates a schematic diagram of a sensing setup response frame according to some embodiments of the present disclosure.

Illustratively, the sensing setup response frame includes a MAC frame header and a MAC frame body. The MAC frame body includes an Action field, and the Action field carries an STA Custom ID field 26 of the first device with a length of 2 bytes.

In some embodiments, the STA Custom ID field 26 is carried in the Action field of the sensing setup response frame or another part. The position of the custom identifier in the sensing setup response frame is not limited in the present disclosure.

FIGS. 25 to 31 illustrate the embodiments of a method for using a custom identifier corresponding to the case in the Method 3.

FIG. 25 illustrates a method for using a custom identifier in a sensing measurement process. The sensing measurement process includes the AP device and the sensing receiver. Reference may be made to the scenario in FIG. 18(4). That is, the sensing receiver is the sensing receiver (for example, the STA 2 in FIG. 18(4)) in the STA-STA sensing measurement scenario. The method includes the following processes.

**In S4401, the sensing receiver transmits a sensing measurement report frame to the AP device.**

In some embodiments, for example, in the STA-STA sensing measurement, the sensing receiver does not know the custom identifier of the sensing transmitter, and thus the sensing receiver carries the second identification information of the sensing transmitter in the sensing measurement report frame in the reporting phase,. The second identification information includes at least one of an AID or a USID.

Illustratively, the AP device receives the sensing measurement report frame, and the sensing measurement report frame carries the sensing result and the second identification information of the sensing transmitter. The custom identifier of the sensing transmitter is determined based on the corresponding relationship between the custom identifier and the second identification information, and the second identification information includes at least one of an AID or a USID.

That is, the sensing receiver transmits the sensing measurement report frame to the AP device, and the sensing measurement report frame carries the sensing result, the second identification information of the sensing transmitter, and the custom identifier of the sensing receiver. The AP device, after receiving the sensing measurement report frame, replaces the second identification information of the sensing transmitter in the sensing measurement report frame with the custom identifier of the sensing transmitter based on the corresponding relationship between the custom identifier and the second identification information.

**In S4402, the AP device reports to the sensing application program.**

Illustratively, after the AP device replaces the second identification information of the sensing transmitter in the sensing measurement report frame with the custom identifier of the sensing transmitter based on the corresponding relationship between the custom identifier and the second identification information, the AP device reports the sensing result, the custom identifier of the sensing transmitter, and the custom identifier of the sensing receiver to the sensing application program in the AP device. For example, the sensing result, the custom identifier of the sensing transmitter, and the custom identifier of the sensing receiver are reported to the sensing application program in the AP device over the internal device interface of the AP device.

FIG. 26 illustrates a method for using a custom identifier in a sensing measurement process. The sensing measurement process includes the sensing-by-proxy initiator, the AP device, and the sensing receiver. Reference may be made to the scenario in FIG. 18(8). That is, the sensing receiver is the sensing receiver (for example, the STA 2 in FIG. 18(8)) in the STA-STA sensing measurement scenario. The method includes the following processes.

**In S4403, the sensing receiver transmits a sensing measurement report frame to the AP device.**

Illustratively, the AP device receives the sensing measurement report frame, and the sensing measurement report frame carries the sensing result and the second identification information of the sensing transmitter. The custom identifier of the sensing transmitter is determined based on the corresponding relationship between the custom identifier and the second identification information, and the second identification information includes at least one of an AID or a USID.

For a detailed implementation process of S4403, reference may be made to S4401, which is not repeated herein.

**In S4404, the AP device transmits a sensing-by-proxy report frame to a sensing-by-proxy initiator.**

Illustratively, after the AP device replaces the second identification information of the sensing transmitter in the sensing measurement report frame with the custom identifier of the sensing transmitter based on the corresponding relationship between the custom identifier and the second identification information, the AP device reports the sensing result, the custom identifier of the sensing transmitter, and the custom identifier of the sensing receiver to the sensing-by-proxy initiator.

Illustratively, the AP device forwards the sensing result, the custom identifier of the sensing transmitter, and the custom identifier of the sensing receiver to the sensing-by-proxy requester through the sensing-by-proxy report frame.

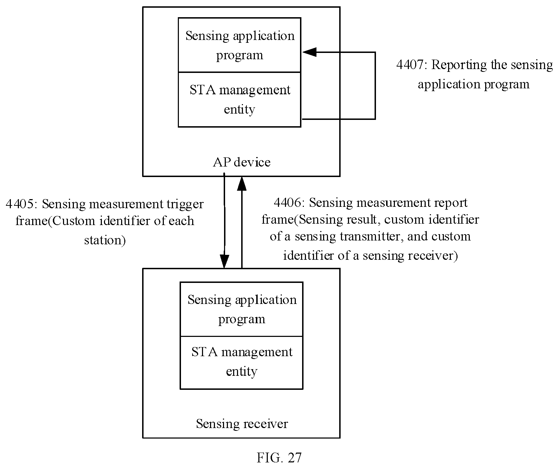

FIG. 27 illustrates a method for using a custom identifier in a sensing measurement process. The sensing measurement process includes the AP device and the sensing receiver. Reference may be made to the scenario in FIG. 18(4). That is, the sensing receiver is the sensing receiver (for example, the STA 2 in FIG. 18(4)) in the STA-STA sensing measurement scenario. The method includes the following processes.

**In S4405, the AP device transmits a sensing measurement trigger frame to the sensing receiver.**

In some embodiments, the AP device carries the custom identifier corresponding to the STA in the sensing measurement trigger frame transmitted at the very beginning of the sensing measurement phase, and thus the sensing receiver obtains the custom identifier of the sensing transmitter.

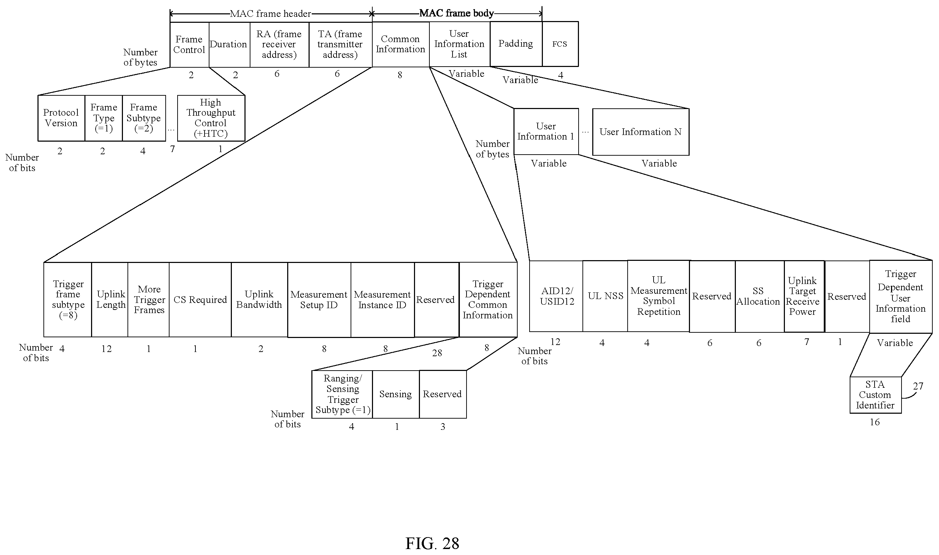

FIG. 28 illustrates a schematic structural diagram of a sensing measurement trigger frame according to some embodiments of the present disclosure.

Illustratively, the sensing measurement trigger frame includes a MAC frame header and a MAC frame body. The MAC frame body includes a User Information field. The User Information field includes a Trigger Dependent User Information field, and the Trigger Dependent User Information field includes an STA Custom Identifier field 27.

In some embodiments, the STA Custom Identifier field 27 is carried in the Trigger Dependent User Information field in the sensing measurement trigger frame, or other positions. The position of the custom identifier of the STA in the sensing measurement trigger frame is not limited in the present disclosure.

Illustratively, the AP device transmits the sensing measurement trigger frame. The sensing measurement trigger frame carries the custom identifier of the sensing transmitter and/or the sensing receiver.

Illustratively, the sensing receiver, after receiving the sensing measurement trigger frame, parses the STA information content corresponding to an AID being an AID value of the sensing receiver in the sensing measurement trigger frame, and further needs to parse the STA information content corresponding to an AID being an AID value of the corresponding sensing transmitter in the sensing measurement trigger frame, such that the custom identifier of the corresponding sensing transmitter is acquired.

**In S4406, the sensing receiver transmits a sensing measurement report frame to the AP device.**

As the sensing receiver obtains the custom identifier of the corresponding sensing transmitter through the sensing measurement trigger frame, the sensing measurement report frame transmitted by the sensing receiver to the AP includes the sensing result, the custom identifier of the sensing receiver, and the custom identifier of the sensing transmitter.

Illustratively, the AP device receives the sensing measurement report frame, and the sensing measurement report frame carries the sensing result, the custom identifier of the sensing transmitter, and the custom identifier of the sensing receiver.

**In S4407, the AP device reports to the sensing application program.**

Illustratively, the AP device reports the sensing result, the custom identifier of the sensing transmitter, and the custom identifier of the sensing receiver to the sensing application program in the AP device. For example, the sensing result, the custom identifier of the sensing transmitter, and the custom identifier of the sensing receiver are reported to the sensing application program in the AP device over the internal device interface of the AP device.

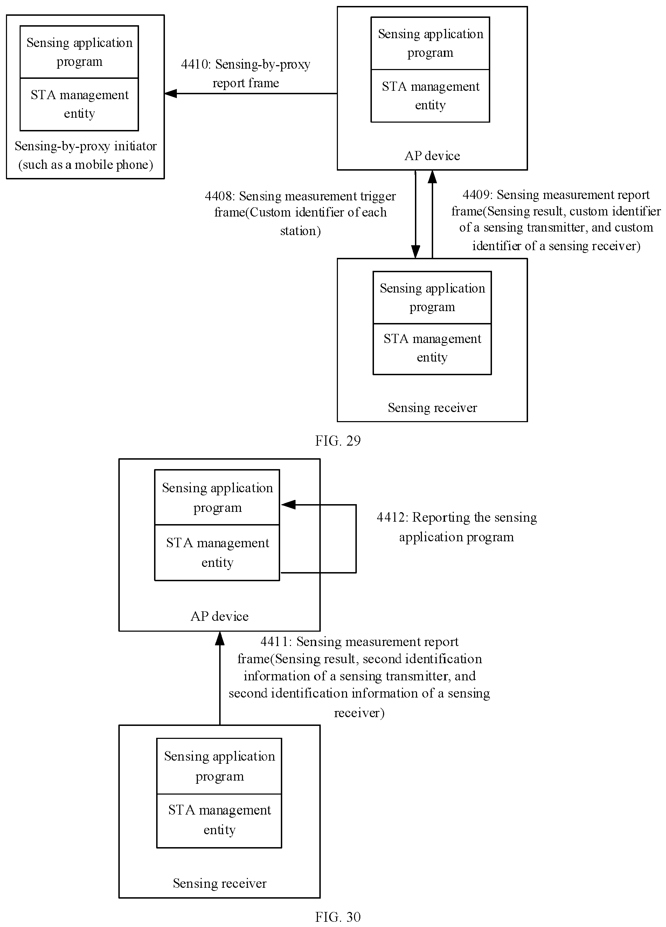

FIG. 29 illustrates a method for using a custom identifier in a sensing measurement process. The sensing measurement process includes the sensing-by-proxy initiator, the AP device, and the sensing receiver. Reference may be made to the scenario in FIG. 18(8). That is, the sensing receiver is the sensing receiver (for example, the STA 2 in FIG. 18(8)) in the STA-STA sensing measurement scenario. The method includes the following processes.

**In S4408, the AP device transmits a sensing measurement trigger frame to the sensing receiver.**

Illustratively, the AP device transmits the sensing measurement trigger frame. The sensing measurement trigger frame carries the custom identifier of the sensing transmitter and/or the sensing receiver.

For a detailed implementation process of S4408, reference may be made to S4405, which is not repeated herein.

**In S4409, the sensing receiver transmits a sensing measurement report frame to the AP device.**

As the sensing receiver obtains the custom identifier of the corresponding sensing transmitter through the sensing measurement trigger frame, the sensing measurement report frame transmitted by the sensing receiver to the AP includes the sensing result, the custom identifier of the sensing receiver, and the custom identifier of the sensing transmitter.

Illustratively, the AP device receives the sensing measurement report frame, and the sensing measurement report frame carries the sensing result, the custom identifier of the sensing transmitter, and the custom identifier of the sensing receiver.

**In S4410, the AP device transmits a sensing-by-proxy report frame to the sensing-by-proxy initiator.**

Illustratively, the AP device reports the sensing result, the custom identifier of the sensing transmitter, and the custom identifier of the sensing receiver to the sensing-by-proxy initiator.

Illustratively, the AP device forwards the sensing result, the custom identifier of the sensing transmitter, and the custom identifier of the sensing receiver to the sensing-by-proxy requester through the sensing-by-proxy report frame.

FIG. 30 illustrates a method for using a custom identifier in a sensing measurement process. The sensing measurement process includes the AP device and the sensing receiver. Reference may be made to the scenario in FIG. 18(4). That is, the sensing receiver is the sensing receiver (for example, the STA 2 in FIG. 18(4)) in the STA-STA sensing measurement scenario. The method includes the following processes.

**In S4411, the sensing receiver transmits a sensing measurement report frame to the AP device.**

As the AP device s obtains the custom identifier of the STA in the custom identifier setup phase, or obtains the custom identifier of the STA through the sensing setup response frame transmitted by the STA, the AP device stores a corresponding relationship between the custom identifier and the AID/USID of each STA.

Illustratively, the sensing receiver carries the sensing result, the second identification information of the sensing transmitter, and second identification information of the sensing receiver in the sensing measurement report frame. The second identification information includes at least one of an AID or a USID.

Illustratively, the AP device receives the sensing measurement report frame, and the sensing measurement report frame carries the sensing result, the second identification information of the sensing transmitter, and the second identification information of the sensing receiver. The custom identifiers of the sensing transmitter and the sensing receiver are determined based on the corresponding relationships between the custom identifiers and the second identification information.

That is, the AP device obtains the second identification information of the sensing transmitter and the second identification information of the sensing receiver from the sensing measurement report frame, and replaces the second identification information of the sensing transmitter in the sensing measurement report frame with the custom identifier of the sensing transmitter and replaces the second identification information of the sensing receiver with the custom identifier of the sensing receiver based on the corresponding relationships between the custom identifiers and the second identification information.

**In S4412, the AP device reports to the sensing application program.**

Illustratively, after the AP device replaces the second identification information of the sensing transmitter and the sensing receiver in the sensing measurement report frame with the respective corresponding custom identifiers based on the corresponding relationships between the custom identifiers and the second identification information, the AP device reports the sensing result, the custom identifier of the sensing transmitter, and the custom identifier of the sensing receiver to the sensing application program in the AP device. For example, the sensing result, the custom identifier of the sensing transmitter, and the custom identifier of the sensing receiver are reported to the sensing application program in the AP device over the internal device interface of the AP device.

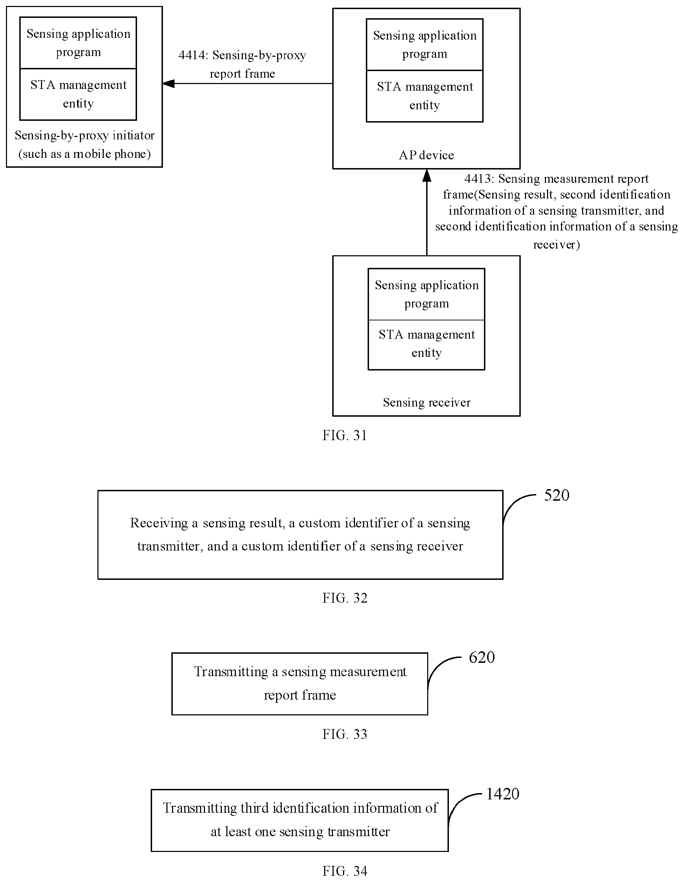

FIG. 31 illustrates a method for using a custom identifier in a sensing measurement process. The sensing measurement process includes the sensing-by-proxy initiator, the AP device, and the sensing receiver. Reference may be made to the scenario in FIG. 18(8). That is, the sensing receiver is the sensing receiver (for example, the STA 2 in FIG. 18(8)) in the STA-STA sensing measurement scenario. The method includes the following processes.

**In S4413, the sensing receiver transmits a sensing measurement report frame to the AP device.**

Illustratively, the AP device receives the sensing measurement report frame, and the sensing measurement report frame carries the sensing result, the second identification information of the sensing transmitter, and the second identification information of the sensing receiver. The custom identifiers of the sensing transmitter and the sensing receiver are determined based on the corresponding relationships between the custom identifiers and the second identification information.

For a detailed implementation process of S4413, reference may be made to S4411, which is not repeated herein.

**In S4414, the AP device transmits a sensing-by-proxy report frame to the sensing-by-proxy initiator.**

Illustratively, after the AP device replaces the second identification information of the sensing transmitter and the sensing receiver in the sensing measurement report frame with the respective corresponding custom identifiers based on the corresponding relationships between the custom identifiers and the second identification information, the AP device reports the sensing result, the custom identifier of the sensing transmitter, and the custom identifier of the sensing receiver to the sensing-by-proxy initiator.

Illustratively, the AP device forwards the sensing result, the custom identifier of the sensing transmitter, and the custom identifier of the sensing receiver to the sensing-by-proxy requester through the sensing-by-proxy report frame.

In summary, in the technical solutions according to the embodiments of the present disclosure, the AP device carries the custom identifier of the sensing transmitter and the custom identifier of the sensing receiver in the sensing measurement instance in the sensing result and reports the same to the sensing application program, such that the sensing application program can correspond the sensing result to the position information of the sensing participant to assists in improving the sensing precision.

FIG. 32 illustrates a flowchart of a method for using a custom identifier according to some embodiments of the present disclosure. The method is applicable to the sensing initiator or the sensing-by-proxy initiator, and includes the following processes.

**In S520, a sensing result, a custom identifier of a sensing transmitter, and a custom identifier of a sensing receiver are received.**

Illustratively, the custom identifier is for identifying the identity of the sensing participant in the WLAN sensing process. The sensing transmitter and the sensing receiver correspond to the sensing result.

Illustratively, in the non-sensing by proxy scenario, the sensing initiator receives the sensing result, the custom identifier of the sensing transmitter, and the custom identifier of the sensing receiver. The sensing initiator reports the sensing result, the custom identifier of the sensing transmitter, and the custom identifier of the sensing receiver to the upper-layer application, that is, the sensing application program, in the sensing initiator over the internal device interface.

Illustratively, in the sensing by proxy scenario, the sensing initiator receives the sensing result, the custom identifier of the sensing transmitter, and the custom identifier of the sensing receiver, and then forwards the same to the sensing-by-proxy initiator, for example, to report through a sensing-by-proxy report frame. The sensing-by-proxy initiator, after receiving the sensing-by-proxy report frame, reports the sensing result, the custom identifier of the sensing transmitter, and the custom identifier of the sensing receiver to the upper-layer application in the sensing-by-proxy initiator, that is, the sensing application program, over the internal device interface.

For introduction of the sensing initiator or the sensing-by-proxy initiator in the method for using the custom identifier, reference may be made to the content described above, which are not repeated herein.

FIG. 33 illustrates a flowchart of a method for using a custom identifier according to some embodiments of the present disclosure. The method is applicable to the sensing receiver, and the method includes the following processes.

**In S620, a sensing measurement report frame is transmitted.**

Illustratively, the sensing measurement report frame carries the sensing result and the custom identifier of the sensing receiver, and the custom identifier is for identifying the identity of the sensing participant in the WLAN sensing process and/or in the WLAN sensing result. In the embodiments of the present disclosure, the custom identifier is for identifying the identity of the sensing receiver.

In some embodiments, the sensing measurement report frame further carries the custom identifier of the sensing transmitter corresponding to the sensing result (for example, in the embodiments shown in FIG. 32) or the second identification information of the sensing transmitter corresponding to the sensing result (for example, in the embodiments shown in FIG. 30). The second identification information includes at least one of an AID or a USID.

In some embodiments, the sensing receiver receives the sensing measurement trigger frame. The sensing measurement trigger frame carries the custom identifier of the sensing transmitter and/or the sensing receiver (for example, in the embodiments shown in FIG. 32).

For the introduction of the sensing receiver in the method for using the custom identifier, reference may be made to the content described above, which is not repeated herein.

FIG. 34 illustrates a flowchart of a method for receiving a sensing signal according to some embodiments of the present disclosure. The method is applicable to a fourth device, and includes the following processes.

**In S1420, third identification information of at least one sensing transmitter is transmitted.**

Illustratively, the fourth device is the sensing initiator or the sensing-by-proxy responder. For example, the fourth device is the AP device.

Illustratively, the third identification information includes at least one of a MAC address, an AID, a USID, or a custom identifier.

That is, the fourth device transmits to the sensing receiver the third identification information of at least one sensing transmitter corresponding to the sensing receiver. The sensing receiver, after receiving the third identification information corresponding to the at least one sensing transmitter corresponding to the sensing receiver, properly receives the sensing signal in the sensing measurement process.

Illustratively, the third identification information is carried in at least one of the sensing setup request frame, the sensing polling trigger frame, or the sensing measurement trigger frame.

That is, the fourth device indicates, by transmitting the sensing setup request frame to the sensing receiver, the third identification information of the at least one sensing transmitter corresponding to the sensing receiver in the sensing measurement setup process; or in the sensing measurement instance, the fourth device indicates, by transmitting the sensing polling trigger frame to the sensing receiver, the third identification information of the at least one sensing transmitter corresponding to the sensing receiver; or in the sensing measurement instance, the fourth device indicates, by transmitting the sensing measurement trigger frame to the sensing receiver, the third identification information of the at least one sensing transmitter corresponding to the sensing receiver.

Illustratively, the third identification information is carried in at least one of a Measurement Setup Parameter Element field in the sensing setup request frame, a Trigger Dependent User Information field in the sensing polling trigger frame, or a Trigger Dependent User Information field in the sensing measurement trigger frame.

Illustratively, the Trigger Dependent User Information field may be understood as user information corresponding to a trigger frame type. Different trigger frames are of different trigger frame types, and different trigger frame types correspond to different user information fields. Some trigger frame types correspond to no user information field.

In some embodiments, the above field further includes a Sensing Transmitter Number Information field.

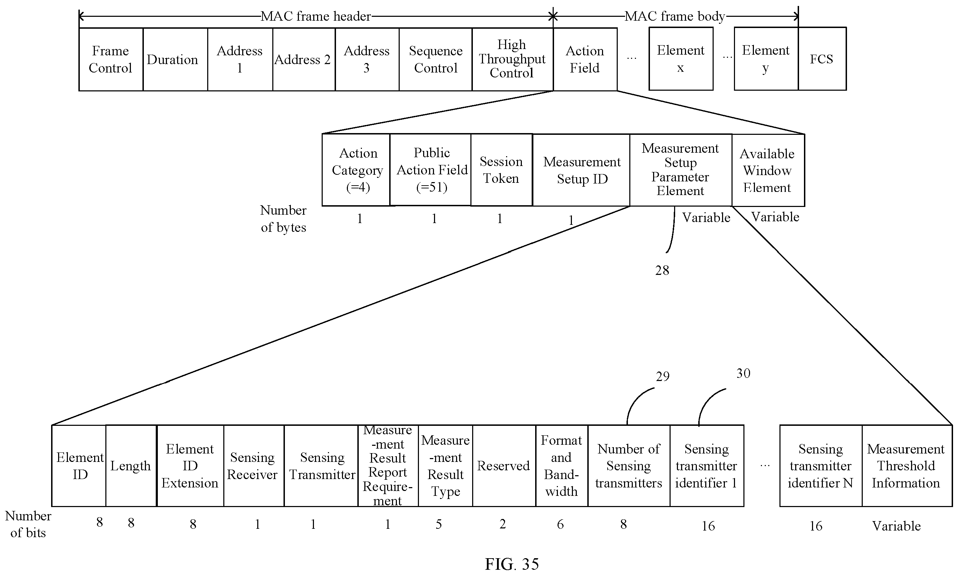

FIG. 35 illustrates a schematic diagram of a sensing setup request frame according to some embodiments of the present disclosure. As shown in the drawing, the sensing setup request frame includes a MAC frame header and a MAC frame body. The MAC frame body includes an Action field. The Action field includes a Measurement Setup Parameter Element field 28 (the length of the field is variable), and the Measurement Setup Parameter Element field 28 includes a Number of Sensing transmitters 29 (occupying 8 bits) and a Sensing Transmitter ID field 30 corresponding to each sensing transmitter (each sensing transmitter occupies 16 bits). The Sensing Transmitter ID field 30 includes at least one of a MAC Address field, an AID field, a USID field, or a Custom Identifier field.

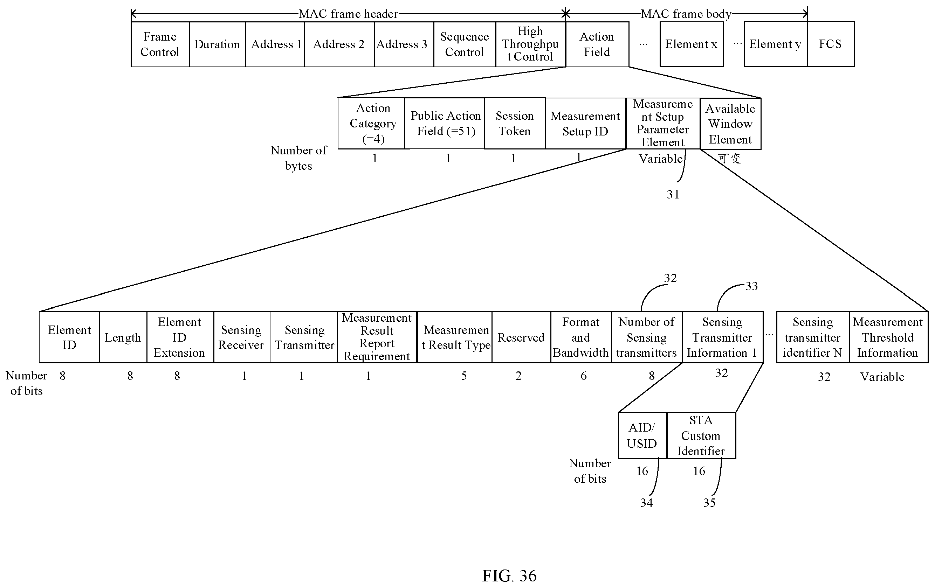

FIG. 36 illustrates a schematic diagram of a sensing setup request frame according to some embodiments of the present disclosure. As shown in the figure, the sensing setup request frame includes a MAC frame header and a MAC frame body. The MAC frame body includes an Action field. The Action field includes a Measurement Setup Parameter Element field 31 (the length of the field is variable), and the Measurement Setup Parameter Element field 31 includes a Number of Sensing transmitters 32 (occupying 8 bits) and a Sensing Transmitter Information field 33 corresponding to each sensing transmitter (each sensing transmitter occupies 32 bits). The Sensing Transmitter Information field 33 includes a Sensing Transmitter AID/USID field 34 (occupying 16 bits) and an STA custom identifier (occupying 16 bits).

In some embodiments, the third identification information is carried in the Measurement Setup Parameter Element field of the sensing setup request frame or other fields. The position of the third identification information in the sensing setup request frame is not limited in the present disclosure.

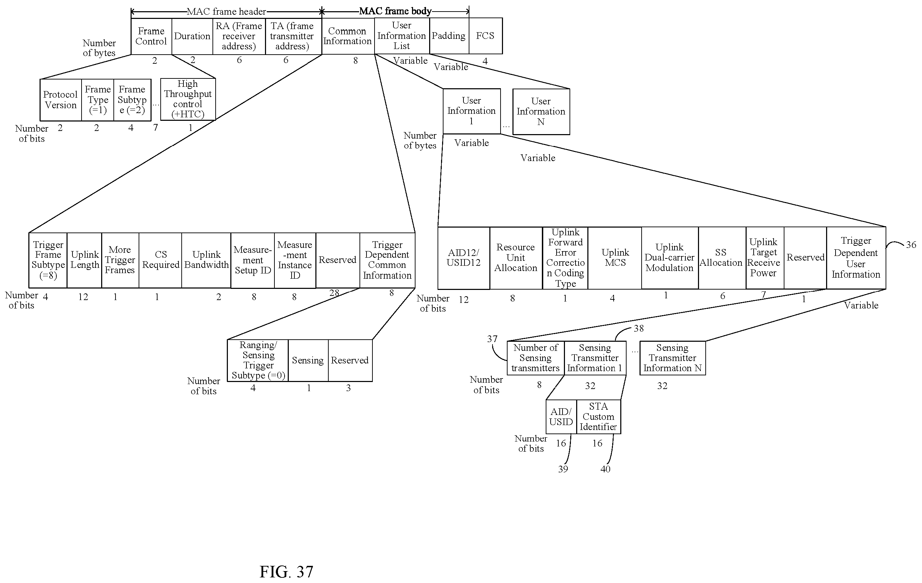

FIG. 37 illustrates a schematic diagram of a sensing polling trigger frame according to some embodiments of the present disclosure. As shown in the drawing, the sensing polling trigger frame includes a MAC frame header and a MAC frame body. The MAC frame body includes a User Information List field, and the User Information List field includes a User Information fields of each STA. The User Information fields of each STA includes a Trigger Dependent User Information field 36 (with a variable length), and the Trigger Dependent User Information field 36 includes a Number of Sensing transmitters 37 (occupying 8 bits) and a Sensing Transmitter Information field 38 (each sensing transmitter occupies 32 bits). The Sensing Transmitter Information field 38 includes an AID/USID 39 field occupying 8 bits and an STA Custom ID field occupying 16 bits.

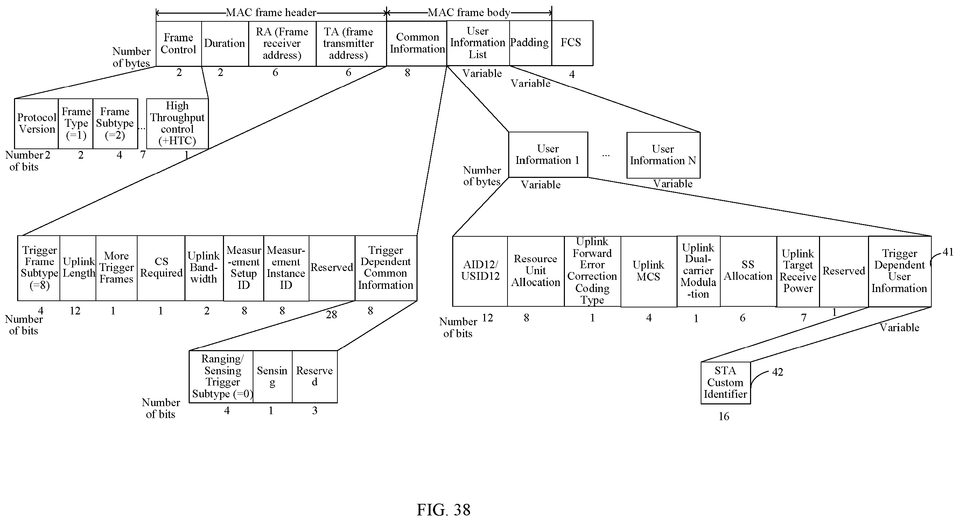

FIG. 38 illustrates a schematic diagram of a sensing polling trigger frame according to some embodiments of the present disclosure. As shown in the figure, the sensing polling trigger frame includes a MAC frame header and a MAC frame body. The MAC frame body includes a User Information List field, and the User Information List field includes a User Information field of each STA. The User Information field specific to each STA includes a Trigger Dependent User Information field 36 (with a variable length), and the Trigger Dependent User Information field 36 includes at least an STA Custom Identifier field (occupying 16 bits).

In some embodiments, the third identification information is carried in the Trigger Dependent User Information field in the sensing polling trigger frame or other fields. The position of the third identification information in the sensing polling trigger frame is not limited in the present disclosure.

Illustratively, FIG. 28 is a schematic diagram of a sensing measurement trigger frame according to some embodiments of the present disclosure. As shown in the drawing, the third identification information is carried in the Trigger Dependent User Information field in the sensing measurement trigger frame. That is, the Trigger Dependent User Information field in FIG. 28 includes the STA Custom Identifier field 27.

In some embodiments, the third device is the sensing-by-proxy responder. In this case, the third device further receives the sensing-by-proxy request frame, and the sensing-by-proxy request frame carries the third identification information of the sensing receiver and the third identification information of at least one sensing transmitter corresponding to the sensing receiver.

That is, in the sensing-by-proxy request response process, the sensing-by-proxy initiator indicates, by transmitting the sensing-by-proxy request frame to the sensing-by-proxy responder, the sensing receiver participating in the sensing measurement and the at least one sensing transmitter corresponding to the sensing receiver to the sensing-by-proxy responder. The sensing-by-proxy request frame carries the third identification information of the sensing receiver and the third identification information of the at least one sensing transmitter corresponding to the sensing receiver.

In some embodiments, the third identification information is carried in a Sensing Responders List field of the sensing-by-proxy request frame.

In some embodiments, the Sensing Responders List field further includes a Sensing Responder Number Information field. The sensing responder includes the sensing receiver and the sensing transmitter.

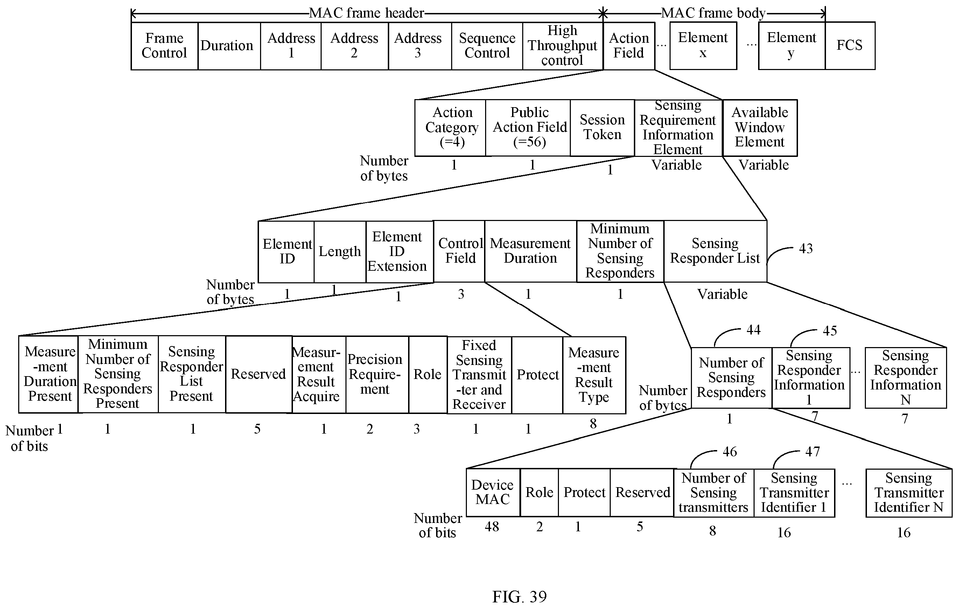

FIG. 39 illustrates a schematic diagram of a sensing-by-proxy request frame according to some embodiments of the present disclosure. As shown in the drawing, the sensing-by-proxy request frame includes a MAC frame header and a MAC frame body. The MAC frame body includes an Action field. The Action field includes a Sensing Requirement Information Element field, the Sensing Requirement Information Element field includes a Sensing Responders List field 43, and the Sensing Responders List field 43 includes a Number of Sensing Responders field 44 (occupying 1 byte) and a Sensing Responder Information field 45 (with a variable length). The Number of Sensing Responders field 44 includes a Sum of Sensing Transmitters and Sensing Receivers.

Illustratively, in the case that the sensing responder is a sensing receiver, the Sensing Responder Information field 45 includes a Number of Sensing transmitters 46 and a sensing transmitter identifier 47 corresponding to the sensing receiver.

Illustratively, in the case that the sensing responder is a sensing transmitter, as the sensing transmitter does not need to know the sensing receiver corresponding to the sensing transmitter, the Sensing Responder Information field 45 is not required to include an Information of Sensing Receiver field. In some embodiments, the Sensing Responder Information field 45 does not indicate a number of sensing receivers and an identifier of the sensing receiver (that is, the Number of Sensing transmitters field 46 and the Sensing Transmitter Identifier field47 are not present). In some embodiments, the Sensing Responder Information field 45 indicates that the number of sensing receiver is 0 (that is, the above Number of Sensing transmitters field 46 is replaced with a Number of Sensing Receivers, and the value of the field is set to 0).

In some embodiments, the third identification information is carried in a Sensing Responders List field of the sensing-by-proxy request frame, or other fields. The position of the third identification information in the sensing-by-proxy request frame is not limited in the present disclosure.

In summary, in the method according to the embodiments of the present disclosure, the third identification information of the at least one sensing transmitter is transmitted to the sensing receiver, such that the sensing receiver obtains the sensing transmitter corresponding to the sensing receiver, and thus properly receives the sensing signal in the sensing measurement process. Thus, the efficiency and accuracy of the sensing measurement are improved.

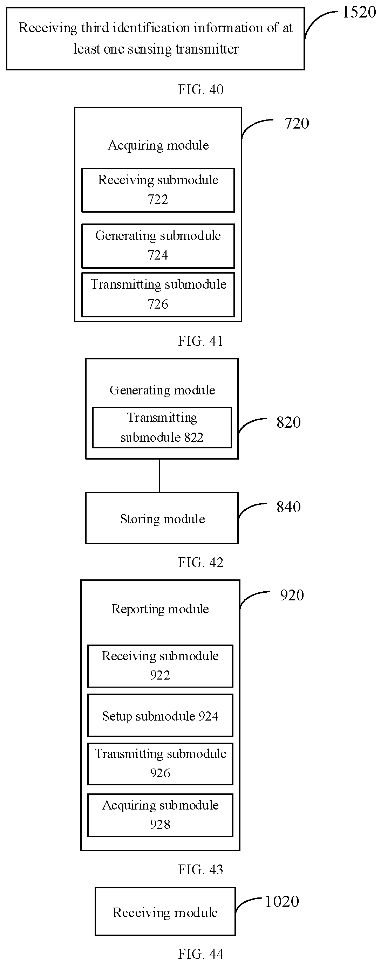

FIG. 40 illustrates a flowchart of a method for receiving a sensing signal according to some embodiments of the present disclosure. The method is applicable to a sensing receiver, and the method includes the following process.

**In S1520, third identification information of at least one sensing transmitter is received.**

Illustratively, the sensing receiver receives the third identification information of the at least one sensing transmitter transmitted by the third device.

Illustratively, the third identification information includes at least one of a MAC address, an AID, a USID, or a custom identifier.

Illustratively, the third device is the sensing initiator or the sensing-by-proxy responder. For example, the third device is the AP device.

That is, the third device transmits to the sensing receiver the third identification information of the at least one sensing transmitter corresponding to the sensing receiver. The sensing receiver, after receiving the third identification information corresponding to the at least one sensing transmitter corresponding to the sensing receiver, properly receives the sensing signal in the sensing measurement process.

Illustratively, the third identification information is carried in at least one of the sensing setup request frame, the sensing polling trigger frame, or the sensing measurement trigger frame.

That is, the sensing receiver obtains, by receiving the sensing setup request frame, the third identification information of the at least one sensing transmitter corresponding to the sensing receiver in the sensing measurement setup process; or in the sensing measurement instance, the sensing receiver obtains, by receiving the sensing polling trigger frame, the third identification information of the at least one sensing transmitter corresponding to the sensing receiver; or in the sensing measurement instance, the sensing receiver obtains, by receiving the sensing measurement trigger frame, the third identification information of the at least one sensing transmitter corresponding to the sensing receiver.

Illustratively, the third identification information is carried in at least one of the Measurement Setup Parameter Element field in the sensing setup request frame, the Trigger Dependent User Information field in the sensing polling trigger frame, or the Trigger Dependent User Information field in the sensing measurement trigger frame.

In some embodiments, the above field further includes a Sensing Transmitter Number Information.

For a schematic structural diagram of the sensing setup request frame, the sensing polling trigger frame, and the sensing measurement trigger frame, reference may be made to the detailed description in the embodiments shown in FIG. 41, which is not repeated herein.

Illustratively, the sensing receiver, after receiving the sensing measurement trigger frame, needs to obtain related information of a to-be-received sensing signal by parsing the sensing measurement trigger frame.

Illustratively, the sensing receiver obtains the related information of a to-be-received sensing signal by parsing STA information fields with AID values being a first AID value and a second AID value in the sensing measurement trigger frame. The first AID value is an AID value of the sensing receiver, and the second AID value is an AID value of the at least one sensing transmitter corresponding to the sensing receiver.

That is, the sensing receiver needs to parse the STA information fields in the sensing measurement trigger frame related to the sensing receiver and the corresponding sensing transmitter.

In some embodiments, the related information of the sensing signal includes at least one of a bandwidth or a spatial stream of the sensing signal (for example, a measurement frame NDP).

In summary, in the method according to the embodiments of the present disclosure, the third identification information of the at least one sensing transmitter is received, such that the sensing receiver obtains the sensing transmitter corresponding to the sensing receiver, and thus properly receives the sensing signal in the sensing measurement process. Thus, the efficiency and accuracy of the sensing measurement are improved.

FIG. 41 illustrates a block diagram of an apparatus for acquiring a custom identifier according to some embodiments of the present disclosure. The apparatus includes an acquiring module 720.

The acquiring module 720 is configured to obtain the custom identifier of the first device, and the custom identifier is for identifying the identity of the first device in a WLAN sensing process.

In some possible embodiments, the acquiring module 720 further includes a receiving submodule 722. The receiving submodule 722 is configured to receive the custom identifier configured by a third-party configuration program for the first device.

In some possible embodiments, the receiving submodule 722 is configured to receive the custom identifier configured by the third-party configuration program for the first device in a communication mode other than communication modes based on IEEE 802.11 protocol.

In some possible embodiments, the communication mode other than communication modes based on the IEEE 802.11 protocol includes at least one of a communication mode based on TCP, a communication mode based on UDP, or a communication mode based on Bluetooth protocol.

In some possible embodiments, the third-party configuration program runs in at least one of a configurator device, a sensing initiator, or a sensing-by-proxy initiator.

In some possible embodiments, in the case that the third-party configuration program runs in the configurator device, the custom identifier of the first device is consistent in all sensing measurements; in the case that the third-party configuration program runs in the sensing initiator, the custom identifier of the first device is consistent in sensing measurements initiated by the sensing initiator; or, in the case that the third-party configuration program runs in the sensing-by-proxy initiator, the custom identifier of the first device is consistent in sensing measurements initiated by the sensing-by-proxy initiator.

In some possible embodiments, the receiving submodule 722 is configured to receive, by an upper-layer application in the first device, the custom identifier configured by the third-party configuration program for the first device. The acquiring module 720 is configured to set, by the upper-layer application in the first device, the custom identifier to an STA management entity in the first device.

In some possible embodiments, the acquiring module 720 is configured to set, by the upper-layer application over an internal STA interface, the custom identifier to the STA management entity in the first device.

In some possible embodiments, the corresponding relationship between the custom identifier and first identification information corresponding to the first device is stored in a database or a server. The first identification information includes at least one of a MAC address, an AID, or a USID.

In some possible embodiments, the acquiring module 720 further includes a generating submodule 724. The generating submodule 724 is configured to generate the custom identifier of the first device.

In some possible embodiments, the generating submodule 724 is configured to generate, by the upper-layer application in the first device, the custom identifier, and set the custom identifier to the STA management entity in the first device; or generate, by the STA management entity in the first device, the custom identifier, and set, by the STA management entity in the first device, the custom identifier.

In some possible embodiments, the acquiring module 720 is configured to obtain, by the upper-layer application in the first device over an internal STA interface, the custom identifier in the case that the STA management entity in the first device generates the custom identifier.

In some possible embodiments, the acquiring module 720 is configured to set, by the upper-layer application in the first device over an internal STA interface, the custom identifier to the STA management entity in the first device.

In some possible embodiments, the custom identifier is determined based on a random value.

In some possible embodiments, the random value is within a first value range.

In some possible embodiments, the acquiring module 720 further includes a transmitting submodule 726. The transmitting submodule 726 is configured to transmit, by the upper-layer application in the first device, the custom identifier to a third-party application program in the communication mode other than communication modes based on the IEEE 802.11 protocol.

In some possible embodiments, the communication mode other than communication modes based on the IEEE 802.11 protocol includes at least one of a communication mode based on TCP, a communication mode based on UDP, or a communication mode based on Bluetooth protocol.

In some possible embodiments, the third-party application program runs in at least one of a service provider, a sensing initiator, or a sensing-by-proxy initiator.

In some possible embodiments, the custom identifier and first identification information corresponding to the first device are stored in a database or a server.

In some possible embodiments, the custom identifier of the sensing initiator is a default value.

In some possible embodiments, the receiving submodule 722 is configured to receive the custom identifier configured by a sensing application program for the first device; or receive a sensing setup request frame, where the sensing setup request frame carries the custom identifier of the first device.

In some possible embodiments, the sensing application program runs in at least one of a sensing initiator, a sensing-by-proxy initiator, a sensing-by-proxy responder, or an AP device.

In some possible embodiments, the sensing setup request frame is transmitted by at least one of: a sensing initiator, a sensing-by-proxy initiator, a sensing-by-proxy responder, or an AP device.

FIG. 42 illustrates a block diagram of an apparatus for generating a custom identifier according to some embodiments of the present disclosure. The apparatus includes a generating module 820 and a Storing module 840.

The generating module 820 is configured to generate a custom identifier of a first device, and the custom identifier is for identifying the identity of the first device in a WLAN sensing process.

The storing module 840 is configured to store a corresponding relationship between the custom identifier of the first device and first identification information, and the first identification information includes at least one of a MAC address, an AID, or a USID.

In some possible embodiments, the generating module 820 is configured to generate, by a sensing application program in the second device, the custom identifier of the first device. The storing module 840 is configured to store, by the sensing application program in the second device, the corresponding relationship between the custom identifier of the first device and the first identification information in an STA management entity in the second device.

In some possible embodiments, the storing module 840 is configured to store, by the sensing application program in the second device over an internal device interface, the corresponding relationship between the custom identifier of the first device and the first identification information in the STA management entity in the second device.

In some possible embodiments, the second device includes a sensing initiator, a sensing-by-proxy responder, or an AP device, and the generating module 820 includes a transmitting submodule 822. The Transmitting submodule 822 is configured to transmit the custom identifier to the first device.

In some possible embodiments, the transmitting submodule 822 is configured to transmit the custom identifier to the first device by a sensing application program; or transmit the custom identifier to the first device via a sensing setup request frame.

In some possible embodiments, the second device includes a sensing-by-proxy initiator or an STA device, and the transmitting submodule 822 is configured to transmit the corresponding relationship between the custom identifier of the first device and the first identification information to a sensing-by-proxy responder or an AP device.

In some possible embodiments, the transmitting submodule 822 is configured to transmit a sensing-by-proxy request frame to the sensing-by-proxy responder or the AP device, and the sensing-by-proxy request frame includes the corresponding relationship between the custom identifier of the first device and the first identification information.

FIG. 43 illustrates a block diagram of an apparatus for using a custom identifier according to some embodiments of the present disclosure. The apparatus includes a reporting module 920.

The reporting module 920 is configured to report a sensing result, a custom identifier of a sensing transmitter, and a custom identifier of a sensing receiver. The custom identifier is for identifying the identity of a sensing participant in a WLAN sensing process, and the sensing transmitter and the sensing receiver correspond to the sensing result.

In some possible embodiments, the reporting module 920 is configured to report the sensing result, the custom identifier of the sensing transmitter, and the custom identifier of the sensing receiver to a sensing application program in the third device; or forward the sensing result, the custom identifier of the sensing transmitter, and the custom identifier of the sensing receiver to a sensing-by-proxy requester through a sensing-by-proxy report frame.

In some possible embodiments, the reporting module 920 includes a receiving submodule 922. The receiving submodule 922 is configured to receive a sensing setup response frame, and the sensing setup response frame carries a custom identifier of the sensing participant.

In some possible embodiments, the third device is the sensing transmitter corresponding to the sensing result, and the receiving submodule 922 is configured to receive a sensing measurement report frame. The sensing measurement report frame carries the sensing result and the custom identifier of the sensing receiver.

In some possible embodiments, the reporting module 920 includes a setup submodule 924. The setup submodule 924 is configured to set the custom identifier of the sensing transmitter as the custom identifier of the third device; or set the custom identifier of the sensing transmitter to a default value.

In some possible embodiments, the third device is the sensing receiver corresponding to the sensing result, and the receiving submodule 922 is configured to receive a sensing setup response frame transmitted by the sensing transmitter. The sensing setup response frame carries the custom identifier of the sensing transmitter.

In some possible embodiments, the receiving submodule 922 is configured to receive a sensing measurement report frame, and the sensing measurement report frame carries the sensing result and second identification information of the sensing transmitter. The custom identifier of the sensing transmitter is determined based on a corresponding relationship between the custom identifier and the second identification information, and the second identification information includes at least one of an AID or a USID.

In some possible embodiments, the receiving submodule 922 is configured to receive a sensing measurement report frame, and the sensing measurement report frame carries the sensing result, the custom identifier of the sensing transmitter, and the custom identifier of the sensing receiver.

In some possible embodiments, the reporting module 920 includes a transmitting submodule 926. The transmitting submodule 926 is configured to transmit a sensing measurement trigger frame, and the sensing measurement trigger frame carries the custom identifier of the sensing transmitter and/or the sensing receiver.

In some possible embodiments, the receiving submodule 922 is configured to receive a sensing measurement report frame, and the sensing measurement report frame carries the sensing result, second identification information of the sensing transmitter, and second identification information of the sensing receiver. The custom identifiers of the sensing transmitter and the sensing receiver are determined based on corresponding relationships between the custom identifiers and the second identification information.

In some possible embodiments, the method is applicable to at least one of the third device is not a sensing transmitter or a sensing receiver corresponding to the sensing result, an STA-STA sensing measurement instance is included, or the AP device stores the corresponding relationships.

In some possible embodiments, the reporting module 920 includes an acquiring submodule 928. The acquiring submodule 928 is configured to obtain the corresponding relationships in a custom identifier setting process; or obtain the corresponding relationships based on a sensing setup response frame transmitted by an STA. The sensing setup response frame carries a custom identifier of the STA.

FIG. 44 illustrates a block diagram of an apparatus for using a custom identifier according to some embodiments of the present disclosure. The apparatus includes a receiving module 1020.

The receiving module 1020 is configured to receive a sensing result, a custom identifier of a sensing transmitter, and a custom identifier of a sensing receiver. The custom identifier is for identifying the identity of a sensing participant in a WLAN sensing process, and the sensing transmitter and the sensing receiver correspond to the sensing result.

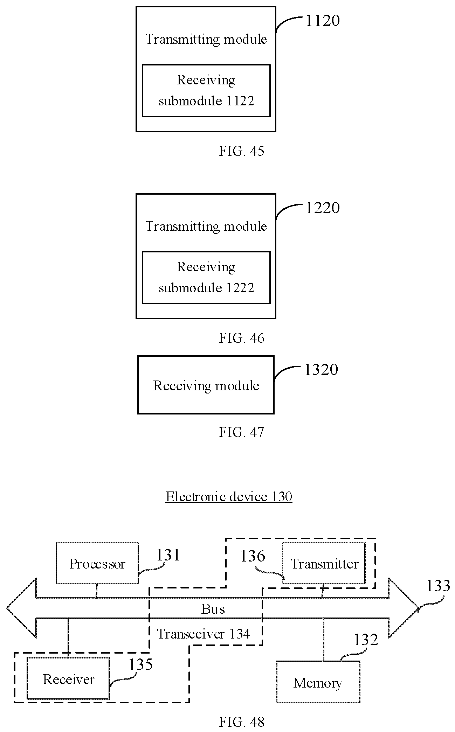

FIG. 45 illustrates a block diagram of an apparatus for using a custom identifier according to some embodiments of the present disclosure. The apparatus includes a transmitting module 1120.

The transmitting module 1120 is configured to transmit a sensing measurement report frame, and the sensing measurement report frame carries a sensing result and a custom identifier of the sensing receiver. The custom identifier is for identifying the identity of the sensing receiver in a WLAN sensing process.

In some possible embodiments, the sensing measurement report frame further carries: a custom identifier of a sensing transmitter corresponding to the sensing result; or second identification information of a sensing transmitter corresponding to the sensing result. The second identification information includes at least one of an AID or a USID.

In some possible embodiments, the transmitting module 1120 further includes a receiving submodule 1122. The receiving submodule 1122 is configured to receive a sensing measurement trigger frame, and the sensing measurement trigger frame carries the custom identifier of the sensing transmitter and/or the sensing receiver.

FIG. 46 illustrates a block diagram of an apparatus for receiving a sensing signal according to some embodiments of the present disclosure. The apparatus includes a transmitting module 1220.

The transmitting module 1220 is configured to transmit third identification information of at least one sensing transmitter, and the third identification information includes at least one of a MAC address, an AID, a USID, or a custom identifier.

In some possible embodiments, the third identification information is carried in at least one of a sensing setup request frame, a sensing polling trigger frame, or a sensing measurement trigger frame.

In some possible embodiments, the third identification information is carried in at least one of a Measurement Setup Parameter Element field in the sensing setup request frame, a Trigger Dependent User Information field in the sensing polling trigger frame, or a Trigger Dependent User Information field in the sensing measurement trigger frame.

In some possible embodiments, the field further includes a Sensing Transmitter Number Information field.

In some possible embodiments, the fourth device is a sensing-by-proxy responder, and the transmitting module 1220 further includes a receiving submodule 1222. The receiving submodule 1222 is configured to receive a sensing-by-proxy request frame, and the sensing-by-proxy request frame carries third identification information of a sensing receiver and third identification information of at least one sensing transmitter corresponding to the sensing receiver.

In some possible embodiments, the third identification information is carried in a Sensing Responders List field of the sensing-by-proxy request frame.

In some possible embodiments, the Sensing Responders List field further includes a Sensing Responder Number Information field, and the sensing responder includes the sensing receiver and the sensing transmitter.

FIG. 47 illustrates a block diagram of an apparatus for receiving a sensing signal according to some embodiments of the present disclosure. The apparatus includes a receiving module 1320.

The receiving module 1320 is configured to receive third identification information of at least one sensing transmitter, and the third identification information includes at least one of a MAC address, an AID, a USID, or a custom identifier.

In some possible embodiments, the third identification information is carried in at least one of a sensing setup request frame, a sensing polling trigger frame, or a sensing measurement trigger frame.

In some possible embodiments, the third identification information is carried in at least one of: a Measurement Setup Parameter Element field in the sensing setup request frame; a Trigger Dependent User Information field in the sensing polling trigger frame, or a Trigger Dependent User Information field in the sensing measurement trigger frame.

In some possible embodiments, the field further includes a Sensing Transmitter Number Information field.

FIG. 48 illustrates a schematic structural diagram of a WLAN device 130 according to some embodiments of the present disclosure. The WLAN device 130 includes: a processor 131, a memory 132, and a bus 133.

The processor 131 includes one or more processing cores, and achieves various functional applications and information processing by running software programs and modules.

The memory 132 is connected to the processor 131 over the bus 133.

The memory 132 is configured to store one or more computer programs, and the processor 131 is configured to run the one or more computer programs to perform the various processes applicable to the WLAN device in the above method embodiments.

Furthermore, the memory 132 is practiced as any type or a combination of volatile or non-volatile storage devices, including, but not limited to: a random-access memory (RAM) and a read-only memory (ROM), an erasable programmable read-only memory (EPROM), an electrically erasable programmable read-only memory (EEPROM), a flash memory or other solid-state memories, a compact disc read-only memory (CD-ROM), a digital video disc (DVD) or other optical storage, a magnetic cassette, a magnetic tape, magnetic disk storage, or other magnetic storage devices.

The WLAN device 130, in the case of being a first device, is configured to set a custom identifier of the first device, and the custom identifier is for identifying the identity of the first device in a WLAN sensing process.

The WLAN device 130, in the case of being a second device, is configured to generate a custom identifier of the first device, where the custom identifier is for identifying the identity of the sensing participant in a WLAN sensing process; and store a corresponding relationship between the custom identifier of the first device and first identification information, where the first identification information includes at least one of a MAC address, an AID, or a USID.

The WLAN device 130, in the case of being an AP device, is configured to report a sensing result, a custom identifier of a sensing transmitter, and a custom identifier of a sensing receiver. The custom identifier is for identifying the identity of the sensing participant in a WLAN sensing process, and the sensing transmitter and the sensing receiver correspond to the sensing result.

The WLAN device 130, in the case of being a sensing initiator or a sensing-by-proxy initiator, is configured to receive a sensing result, a custom identifier of a sensing transmitter, and a custom identifier of a sensing receiver. The custom identifier is for identifying the identity of the sensing participant in a WLAN sensing process, and the sensing transmitter and the sensing receiver correspond to the sensing result.

The WLAN device 130, in the case of being a sensing receiver, is configured to transmit a sensing measurement report frame, and the sensing measurement report frame carries a sensing result and a custom identifier of the sensing receiver. The custom identifier is for identifying the identity of the sensing participant in a WLAN sensing process.

In some embodiments, the WLAN device 130 further includes a transceiver 134 connected to the processor 131, and the transceiver 134 includes a receiver 135 and a transmitter 136.

For details that are not specified in the embodiments, reference may be made to the embodiments described above, which are not repeated herein.

In some embodiments, the present disclosure further provides a computer-readable storage medium storing one or more computer programs, and the one or more computer programs, when loaded and run by a sensing participant, cause the sensing participant to perform the above method for acquiring the custom identifier applicable to the first device.

In some embodiments, the present disclosure further provides a computer-readable storage medium storing one or more computer programs, and the one or more computer programs, when loaded and run by a sensing participant, cause the sensing participant to perform the above method for generating the custom identifier applicable to the second device.

In some embodiments, the present disclosure further provides a computer-readable storage medium storing one or more computer programs, and the one or more computer programs, when loaded and run by a sensing participant, cause the sensing participant to perform the above method for using the custom identifier applicable to the AP device.

In some embodiments, the present disclosure further provides a computer-readable storage medium storing one or more computer programs, and the one or more computer programs, when loaded and run by a sensing participant, cause the sensing participant to perform the above method for using the custom identifier applicable to the sensing initiator or the sensing-by-proxy initiator.

In some embodiments, the present disclosure further provides a computer-readable storage medium storing one or more computer programs, and the one or more computer programs, when loaded and run by a sensing participant, causes the sensing participant to perform the above method for using the custom identifier applicable to the sensing receiver.

In some embodiments, the present disclosure further provides a computer-readable storage medium storing one or more computer programs, and the one or more computer programs, when loaded and run by a sensing participant, cause the sensing participant to perform the above method for receiving the sensing signal applicable to the third device.

In some embodiments, the present disclosure further provides a computer-readable storage medium storing one or more computer programs, and the one or more computer programs, when loaded and run by a sensing participant, cause the sensing participant to perform the above method for receiving the sensing signal applicable to the sensing receiver.

In some embodiments, the computer-readable storage medium includes: a ROM, a RAM, a solid state drive (SSD), an optical disk, and the like. The RAM includes a resistance random-access memory (ReRAM) and a dynamic random-access memory (DRAM).

In some embodiments, the present disclosure further provides a chip including programmable logic circuity or one or more programs, and the chip is configured to perform the above method for acquiring the custom identifier applicable to the first device.

In some embodiments, the present disclosure further provides a chip including programmable logic circuity or one or more programs, and the chip is configured to perform the above method for generating the custom identifier applicable to the second device.

In some embodiments, the present disclosure further provides a chip including programmable logic circuity or one or more programs, and the chip is configured to perform the above method for using the custom identifier applicable to the AP device.

In some embodiments, the present disclosure further provides a chip including programmable logic circuity or one or more programs, and the chip is configured to perform the above method for using the custom identifier applicable to the sensing initiator or the sensing-by-proxy initiator.

In some embodiments, the present disclosure further provides a chip including programmable logic circuity or one or more programs, and the chip is configured to perform the above method for using the custom identifier applicable to the sensing receiver.

In some embodiments, the present disclosure further provides a chip including programmable logic circuity or one or more programs, and the chip is configured to perform the above method for receiving the sensing signal applicable to the third device.

In some embodiments, the present disclosure further provides a chip including programmable logic circuity or one or more programs, and the chip is configured to perform the above method for receiving the sensing signal applicable to the sensing receiver.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for acquiring the custom identifier applicable to the first device.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for generating the custom identifier applicable to the second device.

In some embodiments, the present disclosure further provides a computer program product. The computer program product or computer program includes one or more computer instructions stored in a computer-readable storage medium, wherein sensing participant, when reading the one or more computer instructions from the computer-readable storage medium and executing the one or more computer instructions, is caused to perform the above method for using the custom identifier applicable to the AP device.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for using the custom identifier applicable to the sensing initiator or the sensing-by-proxy initiator.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for using the custom identifier applicable to the sensing receiver.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for receiving the sensing signal applicable to the third device.

In some embodiments, the present disclosure further provides a computer program product. The computer program product or computer program includes one or more computer instructions stored in a computer-readable storage medium, where a sensing participant, when reading the one or more computer instructions from the computer-readable storage medium and executing the one or more computer instructions, is caused to perform the above method for receiving the sensing signal applicable to the sensing receiver.

Described above are merely exemplary embodiments of the present disclosure and are not intended to limit the present disclosure. Any modifications, equivalent substitutions, improvements, and the like, made within the principle of the present disclosure should fall within the protection scope of the present disclosure.

## Claims

1. A method for receiving a sensing signal, applicable to a fourth device, the method comprising:
transmitting (S4405) a sensing measurement trigger frame to a sensing receiver, wherein the sensing measurement trigger frame comprises a first association identifier, AID, and a second AID, wherein a value of the first AID is an AID value of the sensing receiver, and a value of the second AID is an AID value of a sensing transmitter corresponding to the sensing receiver.

2. The method according to claim 1, wherein the first AID and/or the second AID is carried in
a Trigger Dependent User Information field of the sensing measurement trigger frame.

3. The method according to claim 1, wherein the fourth device is a sensing-by-proxy responder.

4. The method according to claim 1, wherein the fourth device is an access point, AP.

5. The method according to any one of claims 1 to 4, wherein transmitting (S4405) the sensing measurement trigger frame to the sensing receiver comprises:
transmitting the sensing measurement trigger frame to the sensing receiver upon initiation of a sensing measurement phase.

6. The method according to any one of claims 1 to 5, wherein the sensing measurement trigger frame comprises a medium access control, MAC, frame header and a MAC frame body, wherein the MAC frame body comprises a User Information field, and the User Information field comprises a Trigger Dependent User Information field, and the Trigger Dependent User Information field comprises an STA Custom Identifier field.

7. A method for receiving a sensing signal, applicable to a sensing receiver, the method comprising:
receiving a sensing measurement trigger frame from a fourth device, wherein the sensing measurement trigger frame comprises a first association identifier, AID, and a second AID, wherein a value of the first AID is an AID value of the sensing receiver, and a value of the second AID is an AID value of a sensing transmitter corresponding to the sensing receiver.

8. The method according to claim 7, further comprising:
parsing station, STA, information content corresponding to the first AID being the AID value of the sensing receiver in the sensing measurement trigger frame; and
parsing STA information content corresponding to the second AID being the AID value of the sensing transmitter corresponding to the sensing receiver in the sensing measurement trigger frame.

9. The method according to claim 7, wherein the first AID and/or the second AID is carried in:
a Trigger Dependent User Information field of the sensing measurement trigger frame.

10. The method according to claim 7, wherein the fourth device is a sensing-by-proxy responder.

11. The method according to claim 7, wherein the fourth device is an access point, AP.

12. The method according to any one of claims 7 to 11, wherein receiving the sensing measurement trigger frame from the fourth device comprises:
receiving the sensing measurement trigger frame from the fourth device upon initiation of a sensing measurement phase.

13. The method according to any one of claims 7 to 12, wherein the sensing measurement trigger frame comprises a medium access control, MAC, frame header and a MAC frame body, wherein the MAC frame body comprises a User Information field, and the User Information field comprises a Trigger Dependent User Information field, and the Trigger Dependent User Information field comprises an STA Custom Identifier field.

14. A wireless local area network, WLAN, device, comprising:
a memory, configured to store one or more computer programs; and
a processor, configured to run the one or more computer programs to perform the method as defined in any one of claims 1 to 6.

15. A wireless local area network, WLAN, device, comprising:
a memory, configured to store one or more computer programs; and
a processor, configured to run the one or more computer programs to perform the method as defined in any one of claims 7 to 13.

## Patentansprüche

1. Verfahren zum Empfangen eines Erfassungssignals, anwendbar auf eine vierte Vorrichtung, wobei das Verfahren umfasst:
Übertragen (S4405) eines Erfassungsmessungs-Auslöserahmens an einen Erfassungsempfänger, wobei der Erfassungsmessungs-Auslöserahmen eine erste Zuordnungskennung, AID, und eine zweite AID umfasst, wobei ein Wert der ersten AID ein AID-Wert des Erfassungsempfängers ist und ein Wert der zweiten AID ein AID-Wert eines dem Erfassungsempfänger entsprechenden Erfassungssenders ist.

2. Verfahren nach Anspruch 1, wobei die erste AID und/oder die zweite AID getragen wird in einem Trigger-abhängigen Benutzerinformationsfeld des Erfassungsmessungs-Auslöserahmens.

3. Verfahren nach Anspruch 1, wobei die vierte Vorrichtung ein Sensing-by-Proxy-Responder ist.

4. Verfahren nach Anspruch 1, wobei die vierte Vorrichtung ein Zugangspunkt, AP, ist.

5. Verfahren nach einem der Ansprüche 1 bis 4, wobei das Übertragen (S4405) des Erfassungsmessungs-Auslöserahmens an den Erfassungsempfänger umfasst:
Übertragen des Erfassungsmessungs-Auslöserahmens an den Erfassungsempfänger bei Einleitung einer Erfassungsmessungsphase.

6. Verfahren nach einem der Ansprüche 1 bis 5, wobei der Erfassungsmessungs-Auslöserahmen einen Medienzugriffssteuerungs-, MAC-, Rahmenkopf und einen MAC-Rahmenkörper umfasst, wobei der MAC-Rahmenkörper ein Benutzerinformationsfeld umfasst und das Benutzerinformationsfeld ein Trigger-abhängiges Benutzerinformationsfeld umfasst und das Trigger-abhängige Benutzerinformationsfeld ein STA-Custom-Identifier-Feld umfasst.

7. Verfahren zum Empfangen eines Erfassungssignals, anwendbar auf einen Erfassungsempfänger, wobei das Verfahren umfasst:
Empfangen eines Erfassungsmessungs-Auslöserahmens von einer vierten Vorrichtung, wobei der Erfassungsmessungs-Auslöserahmen eine erste Zuordnungskennung, AID, und eine zweite AID umfasst, wobei ein Wert der ersten AID ein AID-Wert des Erfassungsempfängers ist und ein Wert der zweiten AID ein AID-Wert eines dem Erfassungsempfänger entsprechenden Erfassungssenders ist.

8. Verfahren nach Anspruch 7, ferner umfassend:
Parsen eines Station-, STA-, Informationsinhalts entsprechend der ersten AID, die der AID-Wert des Erfassungsempfängers ist, in dem Erfassungsmessungs-Auslöserahmen; und
Parsen eines STA-Informationsinhalts entsprechend der zweiten AID, die der AID-Wert des dem Erfassungsempfänger entsprechenden Erfassungssenders ist, in dem Erfassungsmessungs-Auslöserahmen.

9. Verfahren nach Anspruch 7, wobei die erste AID und/oder die zweite AID getragen wird in:
einem Trigger-abhängigen Benutzerinformationsfeld des Erfassungsmessungs-Auslöserahmens.

10. Verfahren nach Anspruch 7, wobei die vierte Vorrichtung ein Sensing-by-Proxy-Responder ist.

11. Verfahren nach Anspruch 7, wobei die vierte Vorrichtung ein Zugangspunkt, AP, ist.

12. Verfahren nach einem der Ansprüche 7 bis 11, wobei das Empfangen des Erfassungsmessungs-Auslöserahmens von der vierten Vorrichtung umfasst:
Empfangen des Erfassungsmessungs-Auslöserahmens von der vierten Vorrichtung bei Einleitung einer Erfassungsmessungsphase.

13. Verfahren nach einem der Ansprüche 7 bis 12, wobei der Erfassungsmessungs-Auslöserahmen einen Medienzugriffssteuerungs-, MAC-, Rahmenkopf und einen MAC-Rahmenkörper umfasst, wobei der MAC-Rahmenkörper ein Benutzerinformationsfeld umfasst und das Benutzerinformationsfeld ein Trigger-abhängiges Benutzerinformationsfeld umfasst und das Trigger-abhängige Benutzerinformationsfeld ein STA-Custom-Identifier-Feld umfasst.

14. Vorrichtung für ein drahtloses lokales Netzwerk, WLAN, umfassend:
einen Speicher, der konfiguriert ist, um ein oder mehrere Computerprogramme zu speichern; und
einen Prozessor, der konfiguriert ist, um das eine oder die mehreren Computerprogramme auszuführen, um das Verfahren nach einem der Ansprüche 1 bis 6 durchzuführen.

15. Vorrichtung für ein drahtloses lokales Netzwerk, WLAN, umfassend:
einen Speicher, der konfiguriert ist, um ein oder mehrere Computerprogramme zu speichern; und
einen Prozessor, der konfiguriert ist, um das eine oder die mehreren Computerprogramme auszuführen, um das Verfahren nach einem der Ansprüche 7 bis 13 durchzuführen.

## Revendications

1. Procédé de réception d'un signal de détection, applicable à un quatrième dispositif, le procédé comprenant :
la transmission (S4405) d'une trame de déclenchement de mesure de détection à un récepteur de détection, dans lequel la trame de déclenchement de mesure de détection comprend un premier identifiant d'association, AID, et un second AID, dans lequel une valeur du premier AID est une valeur d'AID du récepteur de détection, et une valeur du second AID est une valeur d'AID d'un émetteur de détection correspondant au récepteur de détection.

2. Procédé selon la revendication 1, dans lequel le premier AID et/ou le second AID est transporté dans un champ d'informations d'utilisateur dépendant du déclencheur de la trame de déclenchement de mesure de détection.

3. Procédé selon la revendication 1, dans lequel le quatrième dispositif est un répondeur de détection par procuration.

4. Procédé selon la revendication 1, dans lequel le quatrième dispositif est un point d'accès, AP.

5. Procédé selon l'une quelconque des revendications 1 à 4, dans lequel la transmission (S4405) de la trame de déclenchement de mesure de détection au récepteur de détection comprend :
la transmission de la trame de déclenchement de mesure de détection au récepteur de détection lors de l'initiation d'une phase de mesure de détection.

6. Procédé selon l'une quelconque des revendications 1 à 5, dans lequel la trame de déclenchement de mesure de détection comprend un en-tête de trame de contrôle d'accès au support, MAC, et un corps de trame MAC, dans lequel le corps de trame MAC comprend un champ d'informations d'utilisateur, et le champ d'informations d'utilisateur comprend un champ d'informations d'utilisateur dépendant du déclencheur, et le champ d'informations d'utilisateur dépendant du déclencheur comprend un champ d'identifiant personnalisé de STA.

7. Procédé de réception d'un signal de détection, applicable à un récepteur de détection, le procédé comprenant :
la réception d'une trame de déclenchement de mesure de détection en provenance d'un quatrième dispositif, dans lequel la trame de déclenchement de mesure de détection comprend un premier identifiant d'association, AID, et un second AID, dans lequel une valeur du premier AID est une valeur d'AID du récepteur de détection, et une valeur du second AID est une valeur d'AID d'un émetteur de détection correspondant au récepteur de détection.

8. Procédé selon la revendication 7, comprenant en outre :
l'analyse d'un contenu d'informations de station, STA, correspondant au premier AID étant la valeur d'AID du récepteur de détection dans la trame de déclenchement de mesure de détection ; et
l'analyse d'un contenu d'informations de STA correspondant au second AID étant la valeur d'AID de l'émetteur de détection correspondant au récepteur de détection dans la trame de déclenchement de mesure de détection.

9. Procédé selon la revendication 7, dans lequel le premier AID et/ou le second AID est transporté dans :
un champ d'informations d'utilisateur dépendant du déclencheur de la trame de déclenchement de mesure de détection.

10. Procédé selon la revendication 7, dans lequel le quatrième dispositif est un répondeur de détection par procuration.

11. Procédé selon la revendication 7, dans lequel le quatrième dispositif est un point d'accès, AP.

12. Procédé selon l'une quelconque des revendications 7 à 11, dans lequel la réception de la trame de déclenchement de mesure de détection en provenance du quatrième dispositif comprend :
la réception de la trame de déclenchement de mesure de détection en provenance du quatrième dispositif lors de l'initiation d'une phase de mesure de détection.

13. Procédé selon l'une quelconque des revendications 7 à 12, dans lequel la trame de déclenchement de mesure de détection comprend un en-tête de trame de contrôle d'accès au support, MAC, et un corps de trame MAC, dans lequel le corps de trame MAC comprend un champ d'informations d'utilisateur, et le champ d'informations d'utilisateur comprend un champ d'informations d'utilisateur dépendant du déclencheur, et le champ d'informations d'utilisateur dépendant du déclencheur comprend un champ d'identifiant personnalisé de STA.

14. Dispositif de réseau local sans fil, WLAN, comprenant :
une mémoire, configurée pour stocker un ou plusieurs programmes informatiques ; et
un processeur, configuré pour exécuter le ou les programmes informatiques afin de réaliser le procédé tel que défini dans l'une quelconque des revendications 1 à 6.

15. Dispositif de réseau local sans fil, WLAN, comprenant :
une mémoire, configurée pour stocker un ou plusieurs programmes informatiques ; et
un processeur, configuré pour exécuter le ou les programmes informatiques afin de réaliser le procédé tel que défini dans l'une quelconque des revendications 7 à 13.
